# EUROPEAN PATENT APPLICATION

(11) **EP 3 893 497 A1**
(43) Date of publication of application: **13.10.2021**
(21) Application number: 19891814.6
(22) Date of filing: 22.11.2019
(51) Int. Cl.: H04N 7/18, B60R 1/00, G06T 1/00, G06T 7/00, G08G 1/16

(54) **INFORMATION PROCESSING DEVICE, INFORMATION PROCESSING METHOD, AND PROGRAM**

(30) Priority: 07.12.2018 JP 2018230176
(71) Applicant: Sony Semiconductor Solutions Corporation, Atsugi-shi, Kanagawa 243-0014 (JP)
(72) Inventor: ONO, Toshiki, Atsugi-shi, Kanagawa 243-0014 (JP)
(74) Representative: Witte, Weller & Partner Patentanwälte mbB
(86) International application number: PCT/JP2019/045800
(87) International publication number: WO 2020/116205

(57) **Abstract**

The present disclosure relates to an information processing apparatus, an information processing method, and a program that make it possible to reduce an amount of communication data that flows through an in-vehicle network and is necessary for automated driving. An image sensor captures an image of the surroundings of an own automobile; and a recognition section performs object recognition processing of recognizing an object in the captured image, and outputs, to an automated driving controller, an object recognition processing result obtained by the object recognition processing. Further, speed information and distance information are associated with the object recognition processing result to be output as metadata, the speed information being information regarding a speed of an object in the surroundings of the own automobile and being obtained by a millimeter-wave radar, the distance information being information regarding a distance to the object in the surroundings of the own automobile and being obtained by LiDAR. The present disclosure is applicable to an in-vehicle system.

## Description

### Technical Field

The present disclosure relates to an information processing apparatus, an information processing method, and a program, and, in particular, to an information processing apparatus, an information processing method, and a program that make it possible to reduce an amount of communication data that flows through an in-vehicle network and is necessary for automated driving.

### Background Art

In an advanced driver-assistance system (ADAS), such as adaptive cruise control (ACC) and pre-crash safety (PCS), that is intended to improve the convenience and the safety, there is a need to determine whether a vehicle can travel after the presence or absence of an obstacle is confirmed.

In this case, data of an image captured by a camera and data of a result of detection performed by a sensor other than the camera flow through an in-vehicle network.

In recent years, due to a reduction in costs for a sensor such as a camera, the number of sensors installed tends to be increased. The increase in the number of sensors installed such as cameras causes an increase in an amount of data flowing through an in-vehicle network, and this may result in a decrease in communication speed.

0001 Thus, for example, a technology has been proposed that recognizes an object in an image captured by a camera and outputs information regarding coordinates of the object recognized in the image to a vehicle network to reduce an amount of data flowing through the vehicle network (refer to Patent Literature 1).

### Citation List

### Patent Literature

Patent Literature 1: Japanese Patent Application Laid-open No. 2014-125029

### Disclosure of Invention

### Technical Problem

0002 However, according to the technology disclosed in Patent Literature 1, only information regarding coordinates of an object recognized in an image captured by a camera is output. Thus, other information such as information regarding a speed of and a distance to the object, is not included, and thus sufficient information necessary for automated driving is not allowed to flow.

0003 The present disclosure has been made in view of the circumstances described above, and, in particular, the present disclosure makes it possible to reduce an amount of communication data that flows through an in-vehicle network and is necessary for automated driving.

### Solution to Problem

An image processing apparatus according to an aspect of the present disclosure is an image processing apparatus that includes an image-capturing section that captures an image of surroundings of a mobile object; and an object recognition processing section that performs object recognition processing of recognizing an object in the image captured by the image-capturing section, and outputs an object recognition processing result for each recognized object through a network in the mobile object, the object recognition processing result being obtained by the object recognition processing.

An image processing method and a program according to the aspect of the present disclosure correspond to the image processing apparatus.

In the aspect of the present disclosure, an image of surroundings of an own automobile is captured; object recognition processing of recognizing an object in the image captured by the image-capturing section is performed; and an object recognition processing result is output for each recognized object through a network in the mobile object, the object recognition processing result being obtained by the object recognition processing.

### Brief Description of Drawings

0004
[Fig. 1] Fig. 1 illustrates an outline of a general in-vehicle network.
[Fig. 2] Fig. 2 illustrates an outline of an in-vehicle network of the present disclosure.
[Fig. 3] Fig. 3 is a block diagram illustrating an example of a configuration of a vehicle control system of the present disclosure.
[Fig. 4] Fig. 4 is a block diagram illustrating an example of a configuration of a first embodiment of a data acquisition section of the present disclosure.
[Fig. 5] Fig. 5 illustrates a configuration of a recognition section.
[Fig. 6] Fig. 6 illustrates an example of a result of an object recognition performed by the recognition section.
[Fig. 7] Fig. 7 is a flowchart illustrating sensing processing performed by the data acquisition section of Fig. 4.
[Fig. 8] Fig. 8 illustrates an example of adding metadata to the result of the object recognition performed by the recognition section.
[Fig. 9] Fig. 9 is a block diagram illustrating an example of a configuration of a second embodiment of the data acquisition section in which the metadata is added to the result of the object recognition performed by the recognition section.
[Fig. 10] Fig. 10 is a flowchart illustrating sensing processing performed by the data acquisition section of Fig. 9.
[Fig. 11] Fig. 11 illustrates an example in which a plurality of sensor sections is provided to perform sensing with respect to a region all around a vehicle.
[Fig. 12] Fig. 12 is a block diagram illustrating an example of a configuration of a third embodiment of the data acquisition section in which the plurality of sensor sections is provided to perform sensing with respect to the region all around the vehicle.
[Fig. 13] Fig. 13 is a flowchart illustrating integration processing performed by the data acquisition section of Fig. 12 to integrate results of sensing processing performed by the plurality of sensor sections.
[Fig. 14] Fig. 14 illustrates an example in which a plurality of object recognition results obtained using a plurality of images captured with a plurality of sensitivities, and results of sensing performed by a millimeter-wave radar and LiDAR are selectively used according to the condition to perform sensing.
[Fig. 15] Fig. 15 illustrates a pattern of selectively using the plurality of object recognition results obtained using a plurality of images captured with a plurality of sensitivities, and the results of sensing performed by the millimeter-wave radar and the LiDAR.
[Fig. 16] Fig. 16 is a block diagram illustrating an example of a configuration of a fourth embodiment of the data acquisition section in which the plurality of object recognition results obtained using a plurality of images captured with a plurality of sensitivities, and the results of sensing performed by the millimeter-wave radar and the LiDAR are selectively used according to the condition to perform sensing.
[Fig. 17] Fig. 17 is a flowchart illustrating sensing processing performed by the data acquisition section of Fig. 16.
[Fig. 18] Fig. 18 is a flowchart illustrating the recognition result integrating processing of Fig. 17.
[Fig. 19] Fig. 19 is a diagram describing a principle of the occurrence of a flicker when an image of a traffic light using an LED is captured.
[Fig. 20] Fig. 20 is a diagram describing an exposure time of an image sensor of the present disclosure.
[Fig. 21] Fig. 21 is a block diagram illustrating an example of a configuration of a fifth embodiment of the data acquisition section in which the occurrence of a flicker when an image of a traffic light or vehicle lamp using an LED is captured is suppressed.
[Fig. 22] Fig. 22 is a flowchart illustrating flicker suppression processing performed by the data acquisition section of Fig. 21.
[Fig. 23] Fig. 23 illustrates an example of a configuration of a general-purpose computer.

### Mode(s) for Carrying Out the Invention

Favorable embodiments of the present disclosure will be described in detail with reference to the accompanying drawings. Note that, in the specification and the drawings, components having substantially the same functional configuration are denoted by the same reference numeral to omit a repetitive description.

Embodiments for carrying out the present technology are described below. The description is made in the following order.
1. Outline of Present Disclosure
2. Example of Configuration of Vehicle Control System That Controls Vehicle of Present Disclosure
3. First Embodiment
4. Second Embodiment
5. Third Embodiment
6. Fourth Embodiment
7. Fifth Embodiment
8. Example of Performing Series of Processes Using Software

### 0005 <<1. Outline of Present Disclosure>>

An outline of the present disclosure is described.

0006 A vehicle of the present disclosure makes it possible to reduce an amount of communication data that flows through an in-vehicle network and is necessary for automated driving using, for example,

### ADAS.

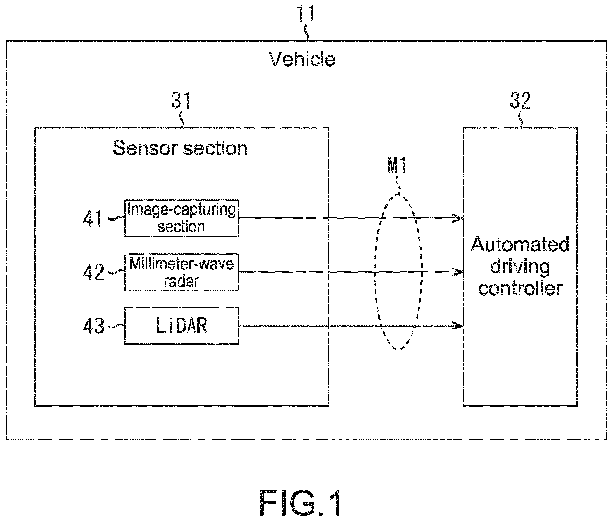

0007 A vehicle 11 that performs automated driving includes, for example, a sensor section 31 and an automated driving controller 32, as illustrated in Fig. 1.

0008 The sensor section 31 senses information regarding a world outside of the vehicle 11 and outputs a sensing result M1 to the automated driving controller 32.

0009 The automated driving controller 32 controls movement of the vehicle 11 on the basis of the sensing result M1 supplied by the sensor section 31, and performs automated driving.

0010 More specifically, the sensor section 31 includes an image-capturing section 41, a millimeter-wave radar 42, and LiDAR (light detection and ranging, laser imaging detection and ranging) 43.

0011 The image-capturing section 41 is, for example, a complementary metal-oxide semiconductor (CMOS) image sensor. The image-capturing section 41 captures an image of the surroundings of the vehicle 11, and outputs image data to the automated driving controller 32 as a sensing result.

0012 The millimeter-wave radar 42 irradiates a radio wave in the millimeter-wave band, detects information regarding a location, a speed, and a direction of an object from information regarding a location at which a peak value of the wave reflected off the object is detected, and outputs the detected information to the automated driving controller 32 as a sensing result.

0013 The LiDAR 43 emits laser light of infrared light, and receives the light reflected off an object. On the basis of a going-and-returning period of time of the light, the LiDAR 43 detects three-dimensional group-of-points information that is group-of-points information regarding a distance to the object, and outputs the detected information to the automated driving controller 32 as a sensing result.

0014 Thus, the sensing result M1 output by the sensor section 31 includes an image captured by the image-capturing section 41, information regarding a location, a speed, and a direction of an object that is detected by the millimeter-wave radar 42, and three-dimensional group-of-points information that is a result of detection performed by the LiDAR 43.

0015 All of the sensing results are high-resolution sensing results. Thus, when all of the pieces of information are output to the automated driving controller 32, an amount of communication data is increased in an in-vehicle network, and this may result in a delay in communication, and thus in an impact on the execution of automated driving.

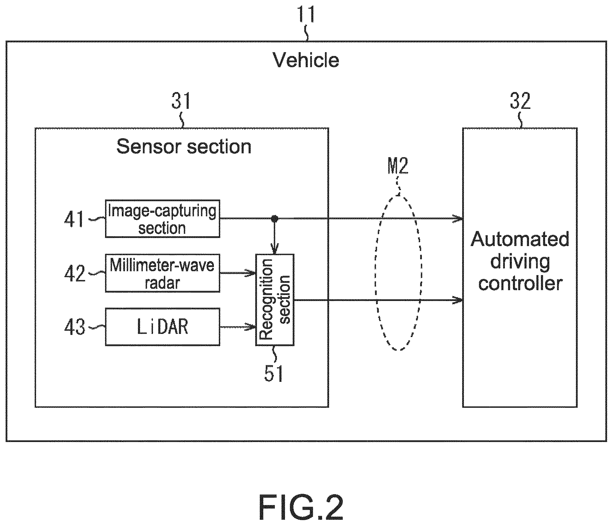

0016 Thus, in the present disclosure, a recognition section 51 is newly provided, as illustrated in Fig. 2. On the basis of an image captured by the image-capturing section 41, the recognition section 51 recognizes an object in the image. A result of sensing performed by the millimeter-wave radar 42 and a result of sensing performed by the LiDAR 43 are output to the recognition section 51.

0017 The recognition section 51 attaches the result of sensing performed by the millimeter-wave radar 42 and the result of sensing performed by the LiDAR 43 as, for example, metadata for each object, the object being a result of an object recognition performed on the basis of an image captured by the image-capturing section 41, and outputs the metadata and the image captured by the image-capturing section 41 to the automated driving controller 32 as a sensing result M2.

0018 According to such a configuration, in the case of the sensing result M2, information regarding a location of, a speed of, a direction of, and a distance to an object that is a result of sensing performed by the millimeter-wave radar 42 and a result of sensing performed by the LiDAR 43, is added as metadata for each object, the object being an object recognition result. This results in being able to reduce an amount of data of the sensing result M2.

0019 Consequently, it is possible to suppress an amount of data of a sensing result that flows through an in-vehicle network while sufficiently securing information necessary for automated driving. This makes it possible to suppress the occurrence of, for example, a delay in communication, and thus to perform appropriate automated driving.

0020 <<2. Example of Configuration of Vehicle Control System That Controls Vehicle of Present Disclosure>>

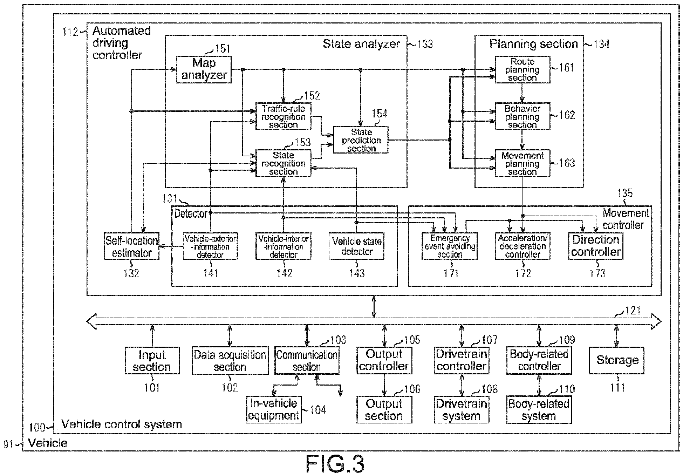

Next, a vehicle control system for a vehicle of the present disclosure is described with reference to a block diagram of Fig. 3.

0021 Fig. 3 is a block diagram illustrating an example of a schematic functional configuration of a vehicle control system 100 that is an example of a mobile-object control system to which the present technology is applicable. The vehicle control system 100 is mounted on a vehicle 91.

0022 Note that, when a vehicle provided with the vehicle control system 100 is to be distinguished from other vehicles, the vehicle provided with the vehicle control system 100 will be hereinafter referred to as an own automobile or an own vehicle.

The vehicle control system 100 includes an input section 101, a data acquisition section 102, a communication section 103, in-vehicle equipment 104, an output controller 105, an output section 106, a drivetrain controller 107, a drivetrain system 108, a body-related controller 109, a body-related system 110, a storage 111, and an automated driving controller 112. The input section 101, the data acquisition section 102, the communication section 103, the output controller 105, the drivetrain controller 107, the body-related controller 109, the storage 111, and the automated driving controller 112 are connected to each other through a communication network 121. For example, the communication network 121 includes a bus or a vehicle-mounted communication network compliant with any standard such as a controller area network (CAN), a local interconnect network (LIN), a local area network (LAN), or FlexRay (registered trademark). Note that the respective structural elements of the vehicle control system 100 may be directly connected to each other without using the communication network 121.

Note that the description of the communication network 121 will be omitted below when the respective structural elements of the vehicle control system 100 communicate with each other through the communication network 121. For example, when the input section 101 and the automated driving controller 112 communicate with each other through the communication network 121, it will be simply stated that the input section 101 and the automated driving controller 112 communicate with each other.

The input section 101 includes an apparatus used by a person on board to input various pieces of data, instructions, and the like. For example, the input section 101 includes an operation device such as a touch panel, a button, a microphone, a switch, and a lever; an operation device with which input can be performed by a method other than a manual operation, such as sound or a gesture; and the like. Alternatively, for example, the input section 101 may be externally connected equipment such as a remote-control apparatus using infrared or another radio wave, or mobile equipment or wearable equipment compatible with an operation of the vehicle control system 100. The input section 101 generates an input signal on the basis of data, an instruction, or the like input by a person on board, and supplies the generated input signal to the respective structural elements of the vehicle control system 100.

The data acquisition section 102 includes various sensors and the like for acquiring data used for a process performed by the vehicle control system 100, and supplies the acquired data to the respective structural elements of the vehicle control system 100.

For example, the data acquisition section 102 includes various sensors used to detect, for example, a state of the own automobile. Specifically, for example, the data acquisition section 102 includes a gyroscope; an acceleration sensor; an inertial measurement unit (IMU); and a sensor or the like used to detect an amount of operation of an accelerator pedal, an amount of operation of a brake pedal, a steering angle of a steering wheel, the number of revolutions of an engine, the number of revolutions of a motor, a speed of wheel rotation, or the like.

Further, for example, the data acquisition section 102 includes various sensors used to detect information regarding the outside of the own automobile. Specifically, for example, the data acquisition section 102 includes an image-capturing apparatus such as a time-of-flight (ToF) camera, a stereo camera, a monocular camera, an infrared camera, and other cameras. Furthermore, for example, the data acquisition section 102 includes an environment sensor used to detect weather, a meteorological phenomenon, or the like, and a surrounding-information detection sensor used to detect an object around the own automobile. For example, the environment sensor includes a raindrop sensor, a fog sensor, a sunshine sensor, a snow sensor, and the like. The surrounding-information detection sensor includes an ultrasonic sensor, a radar, LiDAR (light detection and ranging, laser imaging detection and ranging), a sonar, and the like.

Moreover, for example, the data acquisition section 102 includes various sensors used to detect the current location of the own automobile. Specifically, for example, the data acquisition section 102 includes, for example, a global navigation satellite system (GNSS) receiver that receives a GNSS signal from a GNSS satellite.

Further, for example, the data acquisition section 102 includes various sensors used to detect information regarding the inside of a vehicle. Specifically, for example, the data acquisition section 102 includes an image-capturing apparatus that captures an image of a driver, a biological sensor that detects biological information of the driver, a microphone that collects sound in the interior of a vehicle, and the like. For example, the biological sensor is provided to a seat surface, the steering wheel, or the like, and detects biological information of a person on board sitting on a seat, or a driver holding the steering wheel.

The communication section 103 communicates with the in-vehicle equipment 104 as well as various pieces of vehicle-exterior equipment, a server, a base station, and the like, transmits data supplied by the respective structural elements of the vehicle control system 100, and supplies the received data to the respective structural elements of the vehicle control system 100. Note that a communication protocol supported by the communication section 103 is not particularly limited. It is also possible for the communication section 103 to support a plurality of types of communication protocols.

For example, the communication section 103 wirelessly communicates with the in-vehicle equipment 104 using a wireless LAN, Bluetooth (registered trademark), near-field communication (NFC), a wireless USB (WUSB), or the like. Further, for example, the communication section 103 communicates with the in-vehicle equipment 104 by wire using a universal serial bus (USB), a high-definition multimedia interface (HDMI) (registered trademark), a mobile high-definition link (MHL), or the like through a connection terminal (not illustrated) (and a cable if necessary).

Further, for example, the communication section 103 communicates with equipment (for example, an application server or a control server) situated in an external network (for example, the Internet, a cloud network, or a carrier-specific network) through a base station or an access point. Furthermore, for example, the communication section 103 communicates with a terminal (for example, a terminal of a pedestrian or a store, or a machine-type communication (MTC) terminal) situated near the own automobile, using a peer-to-peer (P2P) technology. Moreover, for example, the communication section 103 performs V2X communication such as vehicle-to-vehicle communication, vehicle-to-infrastructure communication, vehicle-to-home communication between the own automobile and a home, and vehicle-to-pedestrian communication. Further, for example, the communication section 103 includes a beacon receiver, receives a radio wave or an electromagnetic wave transmitted from, for example, a radio station installed on a road, and acquires information regarding, for example, the current location, traffic congestion, traffic regulation, or a necessary time.

Examples of the in-vehicle equipment 104 include mobile equipment or wearable equipment of a person on board, information equipment that is brought in or attached to the own automobile, and a navigation apparatus that searches for a route to any destination.

The output controller 105 controls output of various pieces of information to a person on board of the own automobile or to the outside of the own automobile. For example, the output controller 105 generates an output signal that includes at least one of visual information (such as image data) or audio information (such as sound data), supplies the output signal to the output section 106, and thereby controls output of the visual information and the audio information from the output section 106. Specifically, for example, the output controller 105 combines pieces of data of images captured by different image-capturing apparatuses of the data acquisition section 102, generates a bird's-eye image, a panoramic image, or the like, and supplies an output signal including the generated image to the output section 106. Further, for example, the output controller 105 generates sound data including, for example, a warning beep or a warning message alerting a danger such as collision, contact, or entrance into a dangerous zone, and supplies an output signal including the generated sound data to the output section 106.

The output section 106 includes an apparatus capable of outputting the visual information or the audio information to a person on board of the own automobile or to the outside of the own automobile. For example, the output section 106 includes a display apparatus, an instrument panel, an audio speaker, headphones, a wearable device such as an eyeglass-type display used to be worn on the person on board, a projector, a lamp, and the like. Instead of an apparatus including a commonly used display, the display apparatus included in the output section 106 may be an apparatus, such as a head-up display, a transparent display, or an apparatus including an augmented reality (AR) display function, that displays the visual information in the field of view of a driver.

The drivetrain controller 107 generates various control signals, supplies them to the drivetrain system 108, and thereby controls the drivetrain system 108. Further, the drivetrain controller 107 supplies the control signals to the structural elements other than the drivetrain system 108 as necessary to, for example, notify them of a state of controlling the drivetrain system 108.

The drivetrain system 108 includes various apparatuses related to the drivetrain of the own automobile. For example, the drivetrain system 108 includes a driving force generation apparatus, such as an internal-combustion engine and a driving motor, that generates driving force, a driving force transmitting mechanism used to transmit the driving force to wheels, a steering mechanism that adjusts the steering angle, a braking apparatus that generates a braking force, an antilock braking system (ABS), an electronic stability control (ESC) system, an electric power steering apparatus, and the like.

The body-related controller 109 generates various control signals, supplies them to the body-related system 110, and thereby controls the body-related system 110. Further, the body-related controller 109 supplies the control signals to the structural elements other than the body-related system 110 as necessary to, for example, notify them of a state of controlling the body-related system 110.

The body-related system 110 includes various body-related apparatuses provided to a vehicle body. For example, the body-related system 110 includes a keyless entry system, a smart key system, a power window apparatus, a power seat, a steering wheel, an air conditioner, various lamps (such as a headlamp, a tail lamp, a brake lamp, a blinker, and a fog lamp), and the like.

For example, the storage 111 includes a read only memory (ROM), a random access memory (RAM), a magnetic storage device such as a hard disc drive (HDD), a semiconductor storage device, an optical storage device, a magneto-optical storage device, and the like. The storage 111 stores therein various programs, data, and the like that are used by the respective structural elements of the vehicle control system 100. For example, the storage 111 stores therein map data such as a three-dimensional high-accuracy map, a global map, and a local map. The high-accuracy map is a dynamic map or the like. The global map is less accurate and covers a wider area than the high-accuracy map. The local map includes information regarding the surroundings of the own automobile.

The automated driving controller 112 performs control related to automated driving such as autonomous traveling or a driving assistance. Specifically, for example, the automated driving controller 112 performs a cooperative control intended to implement a function of an advanced driver-assistance system (ADAS) including collision avoidance or shock mitigation for the own automobile, traveling after a leading vehicle based on a distance between vehicles, traveling while maintaining a vehicle speed, a warning of collision of the own automobile, a warning of deviation of the own automobile from a lane, and the like. Further, for example, the automated driving controller 112 performs a cooperative control intended to achieve, for example, automated driving that is autonomous traveling without an operation performed by a driver. The automated driving controller 112 includes a detector 131, a self-location estimator 132, a state analyzer 133, a planning section 134, and a movement controller 135.

The detector 131 detects various pieces of information necessary to control automated driving. The detector 131 includes a vehicle-exterior-information detector 141, a vehicle-interior-information detector 142, and a vehicle state detector 143.

The vehicle-exterior-information detector 141 performs a process of detecting information regarding the outside of the own automobile on the basis of data or a signal from each structural element of the vehicle control system 100. For example, the vehicle-exterior-information detector 141 performs processes of detecting, recognizing, and tracking an object around the own automobile, and a process of detecting a distance to the object. Examples of the detection-target object include a vehicle, a person, an obstacle, a structure, a road, a traffic light, a traffic sign, and a road sign. Further, for example, the vehicle-exterior-information detector 141 performs a process of detecting an environment surrounding the own automobile. Examples of the detection-target surrounding environment include weather, temperature, humidity, brightness, and a road surface condition. The vehicle-exterior-information detector 141 supplies data indicating a result of the detection process to, for example, the self-location estimator 132; a map analyzer 151, a traffic-rule recognition section 152, and a state recognition section 153 of the state analyzer 133; and an emergency event avoiding section 171 of the movement controller 135.

The vehicle-interior-information detector 142 performs a process of detecting information regarding the inside of a vehicle on the basis of data or a signal from each structural element of the vehicle control system 100. For example, the vehicle-interior-information detector 142 performs processes of authenticating and recognizing a driver, a process of detecting a state of the driver, a process of detecting a person on board, and a process of detecting a vehicle interior environment. Examples of the detection-target state of a driver include a physical condition, a degree of arousal, a degree of concentration, a degree of fatigue, and a direction of a line of sight. Examples of the detection-target vehicle interior environment include temperature, humidity, brightness, and odor. The vehicle-interior-information detector 142 supplies data indicating a result of the detection process to, for example, the state recognition section 153 of the state analyzer 133 and the emergency event avoiding section 171 of the movement controller 135.

The vehicle state detector 143 performs a process of detecting a state of the own automobile on the basis of data or a signal from each structural element of the vehicle control system 100. Examples of the detection-target state of the own automobile include speed, acceleration, a steering angle, the presence or absence of anomaly and its details, a driving operation state, a position and an inclination of a power seat, a state of a door lock, and states of other pieces of vehicle-mounted equipment. The vehicle state detector 143 supplies data indicating a result of the detection process to, for example, the state recognition section 153 of the state analyzer 133 and the emergency event avoiding section 171 of the movement controller 135.

The self-location estimator 132 performs a process of estimating a location, a posture, and the like of the own automobile on the basis of data or signals from the respective structural elements of the vehicle control system 100, such as the vehicle-exterior-information detector 141, and the state recognition section 153 of the state analyzer 133. Further, the self-location estimator 132 generates, as necessary, a local map (hereinafter referred to as a self-location estimation map) used to estimate a self-location. For example, the self-location estimation map is a high-accuracy map using a technology such as simultaneous localization and mapping (SLAM). The self-location estimator 132 supplies data indicating a result of the estimation process to, for example, the map analyzer 151, the traffic-rule recognition section 152, and the state recognition section 153 of the state analyzer 133. Further, the self-location estimator 132 stores the self-location estimation map in the storage 111.

The state analyzer 133 performs a process of analyzing states of the own automobile and its surroundings. The state analyzer 133 includes the map analyzer 151, the traffic-rule recognition section 152, the state recognition section 153, and a state prediction section 154.

Using, as necessary, data or signals from the respective structural elements of the vehicle control system 100, such as the self-location estimator 132 and the vehicle-exterior-information detector 141, the map analyzer 151 performs a process of analyzing various maps stored in the storage 111, and constructs a map including information necessary for an automated driving process. The map analyzer 151 supplies the constructed map to, for example, the traffic-rule recognition section 152, the state recognition section 153, and the state prediction section 154, as well as a route planning section 161, a behavior planning section 162, and a movement planning section 163 of the planning section 134.

The traffic-rule recognition section 152 performs a process of recognizing traffic rules around the own automobile on the basis of data or signals from the respective structural elements of the vehicle control system 100, such as the self-location estimator 132, the vehicle-exterior-information detector 141, and the map analyzer 151. The recognition process makes it possible to recognize a location and a state of a traffic light around the own automobile, the details of traffic control performed around the own automobile, and a travelable lane. The traffic-rule recognition section 152 supplies data indicating a result of the recognition process to, for example, the state prediction section 154.

The state recognition section 153 performs a process of recognizing a state related to the own automobile on the basis of data or signals from the respective structural elements of the vehicle control system 100, such as the self-location estimator 132, the vehicle-exterior-information detector 141, the vehicle-interior-information detector 142, the vehicle state detector 143, and the map analyzer 151. For example, the state recognition section 153 performs a process of recognizing a state of the own automobile, a state of the surroundings of the own automobile, a state of a driver of the own automobile, and the like. Further, the state recognition section 153 generates, as necessary, a local map (hereinafter referred to as a state recognition map) used to recognize the state of the surroundings of the own automobile. The state recognition map is, for example, an occupancy grid map.

Examples of the recognition-target state of the own automobile include a location, a posture, and movement (such as speed, acceleration, and a movement direction) of the own automobile, as well as the presence or absence of anomaly and its details. Examples of the recognition-target state of the surroundings of the own automobile include the type and a location of a stationary object around the own automobile; the type, a location, and movement (such as speed, acceleration, and a movement direction) of a moving object around the own automobile; a structure of a road around the own automobile and a condition of the surface of the road; and weather, temperature, humidity, and brightness around the own automobile. Examples of the recognition-target state of a driver include a physical condition, a degree of arousal, a degree of concentration, a degree of fatigue, movement of a line of sight, and a driving operation.

The state recognition section 153 supplies data indicating a result of the recognition process (including a state recognition map as necessary) to, for example, the self-location estimator 132 and the state prediction section 154. Further, the state recognition section 153 stores the state-recognition map in the storage 111.

The state prediction section 154 performs a process of predicting a state related to the own automobile on the basis of data or signals from the respective structural elements of the vehicle control system 100, such as the map analyzer 151, the traffic-rule recognition section 152, and the state recognition section 153. For example, the state prediction section 154 performs a process of predicting a state of the own automobile, a state of the surroundings of the own automobile, a state of a driver, and the like.

Examples of the prediction-target state of the own automobile include the behavior of the own automobile, the occurrence of anomaly in the own automobile, and a travelable distance of the own automobile. Examples of the prediction-target state of the surroundings of the own automobile include the behavior of a moving object, a change in a state of a traffic light, and a change in environment such as weather around the own automobile. Examples of the prediction-target state of a driver include the behavior and the physical condition of the driver.

The state prediction section 154 supplies data indicating a result of the prediction process to, for example, the route planning section 161, the behavior planning section 162, and the movement planning section 163 of the planning section 134 together with the data from the traffic-rule recognition section 152 and the state recognition section 153.

The route planning section 161 plans a route to a destination on the basis of data or signals from the respective structural elements of the vehicle control system 100, such as the map analyzer 151 and the state prediction section 154. For example, the route planning section 161 sets a route from the current location to a specified destination on the basis of a global map. Further, for example, the route planning section 161 changes a route as appropriate on the basis of the states of, for example, traffic congestion, an accident, traffic regulation, and a construction, as well as the physical condition of a driver. The route planning section 161 supplies data indicating the planned route to, for example, the behavior planning section 162.

On the basis of data or signals from the respective structural elements of the vehicle control system 100, such as the map analyzer 151 and the state prediction section 154, the behavior planning section 162 plans the behavior of the own automobile in order for the own automobile to travel safely on the route planned by the route planning section 161 within a time planned by the route planning section 161. For example, the behavior planning section 162 makes plans about, for example, a start to move, a stop, a travel direction (such as a forward movement, a backward movement, a left turn, a right turn, and a change in direction), a lane for traveling, a traveling speed, and passing. The behavior planning section 162 supplies data indicating the planned behavior of the own automobile to, for example, the movement planning section 163.

On the basis of data or signals from the respective structural elements of the vehicle control system 100, such as the map analyzer 151 and the state prediction section 154, the movement planning section 163 plans movement of the own automobile in order to achieve the behavior planned by the behavior planning section 162. For example, the movement planning section 163 makes plans about, for example, acceleration, deceleration, and a traveling course. The movement planning section 163 supplies data indicating the planned movement of the own automobile to, for example, an acceleration/deceleration controller 172 and a direction controller 173 of the movement controller 135.

The movement controller 135 controls movement of the own automobile. The movement controller 135 includes the emergency event avoiding section 171, the acceleration/deceleration controller 172, and the direction controller 173.

On the basis of a result of the detections performed by the vehicle-exterior-information detector 141, the vehicle-interior-information detector 142, and the vehicle state detector 143, the emergency event avoiding section 171 performs a process of detecting emergency events such as collision, contact, entrance into a dangerous zone, something unusual in a driver, and anomaly in the vehicle. When the emergency event avoiding section 171 detects the occurrence of an emergency event, the emergency event avoiding section 171 plans movement of the own automobile such as a sudden stop or a quick turning for avoiding the emergency event. The emergency event avoiding section 171 supplies data indicating the planned movement of the own automobile to, for example, the acceleration/deceleration controller 172 and the direction controller 173.

The acceleration/deceleration controller 172 controls acceleration/deceleration to achieve the movement of the own automobile planned by the movement planning section 163 or the emergency event avoiding section 171. For example, the acceleration/deceleration controller 172 computes a control target value for a driving force generation apparatus or a braking apparatus to achieve the planned acceleration, the planned deceleration, or the planned sudden stop, and supplies a control instruction indicating the computed control target value to the drivetrain controller 107.

The direction controller 173 controls a direction to achieve the movement of the own automobile planned by the movement planning section 163 or the emergency event avoiding section 171. For example, the direction controller 173 computes a control target value for a steering mechanism to achieve the traveling course planned by the movement planning section 163 or the quick turning planned by the emergency event avoiding section 171, and supplies a control instruction indicating the computed control target value to the drivetrain controller 107.

### 0023 <<3. First Embodiment>>

### <Configuration That Reduces Amount of Data of Sensing Result That Flows Through In-vehicle Network>

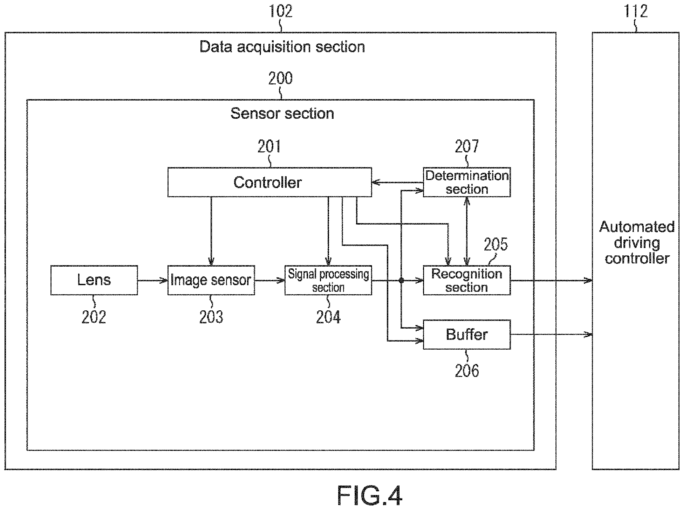

Next, an example of a configuration of the data acquisition section 102 reducing an amount of data of a sensing result that flows through an in-vehicle network is described with reference to a block diagram of Fig. 4.

0024 Note that, from among the examples of the functional configurations implementing the vehicle control system 100 described with reference to Fig. 3, Fig. 4 illustrates a configuration of the data acquisition section 102 reducing an amount of data of a sensing result that flows through an in-vehicle network.

0025 A sensor section 200 is a portion of the data acquisition section 102, and, in Fig. 4, the sensor section 200 is configured to virtually serve as a camera.

0026 The sensor section 200 includes a controller 201, a lens 202, an image sensor 203, a signal processing section 204, a recognition section 205, a buffer 206, and a determination section 207.

0027 The controller 201 includes a processor and a memory, and controls an entire operation of the sensor section 200.

0028 The lens 202 collects light entering from the surroundings of the vehicle 91 such that an image of the entering light is formed on an image-capturing surface of the image sensor 203.

0029 Under the control of the controller 201, the image sensor 203 generates a signal for each pixel on the basis of the surrounding light entering through the lens 202 to output the generated signal to the signal processing section 204.

0030 Under the control of the controller 201, the signal processing section 204 performs signal processing, such as demosaic processing, denoising, and a tone correction, with respect to the signal for each pixel that is supplied by the image sensor 203, and generates an image to output the generated image to the recognition section 205, the buffer 206, and the determination section 207.

0031 The recognition section 205 performs an object recognition for each pixel on the basis of the image supplied by the signal processing section 204, and outputs a result of the recognition for each recognized object to the automated driving controller 112 and the determination section 207 through an in-vehicle network. In other words, it is possible to suppress an amount of data of an object recognition result output through an in-vehicle network by the object recognition result being output for each recognized object, not for each pixel. In this case, the object recognition result includes information regarding coordinates of an object recognized in an image. Consequently, only a position of coordinates of an object and an object recognition result for each recognized object flow through an in-vehicle network, and this makes it possible to reduce a communication load in the in-vehicle network.

0032 More specifically, the recognition section 205 performs an object recognition for each pixel on the basis of an image to recognize, as an object, a ground surface, a human, a vehicle, a building structure, a fixed object, a natural environment, the sky, and the like, and outputs a result of the object recognition.

0033 Examples of the object recognition result of a ground surface include information regarding, for example, a road, a sidewalk, a parking lot, and a trajectory.

0034 Further, examples of the object recognition result of a human include a pedestrian and a driver.

0035 Here, examples of the object recognition result of a driver include riders of a bicycle, a motorcycle, a scooter, a skateboard, and a horse, a roller blader, a person in a wheelchair, and drivers of a motor-sweeper road and an automobile without a roof.

0036 Further, examples of the object recognition result of a vehicle include an automobile, a truck, a bus, an electric train or a railway train that runs on rail, a motorcycle, a bicycle, and a tractor.

0037 Furthermore, examples of the object recognition result of a building structure include a building, a wall, a fence, a guardrail, a bridge, and a tunnel.

0038 Moreover, examples of the object recognition result of a fixed object include a pole, a group of poles, a traffic sign, and a traffic light.

0039 Further, examples of the object recognition result of a natural environment includes information regarding vegetation and information regarding terrain.

0040 Under the control of the controller 201, the buffer 206 temporarily buffers the image supplied by the signal processing section 204, and outputs the buffered image to the automated driving controller 112 at a timing depending on the processing time for each of the recognition processing performed by the recognition section 205 and the signal processing.

0041 Note that, only an object recognition result may be output to the automated driving controller 112 without an image itself being output, or the output may be performed in a state in which the bit rate is reduced. This makes it possible to further suppress an amount of data flowing through an in-vehicle network.

0042 The determination section 207 compares a processing time for recognition processing performed by the recognition section 205 and a processing time for signal processing performed by the signal processing section 204, and outputs a result of the comparison and a difference in processing time to the controller 201.

0043 The controller 201 controls the signal processing section 204, the recognition section 205, and the buffer 206 such that, according to the comparison result, an image that is an image-capturing result is output after the number of the images is reduced, or an object recognition result is output after the number of the object recognition results is reduced, or the image-capturing result and the object recognition result are output without the number of the image-capturing results or the number of the object recognition results being reduced.

0044 Further, when an image that is an image-capturing result is output after the number of the images is reduced or an object recognition result is output after the number of the object recognition results is reduced, the controller 201 outputs the image that is an image-capturing result after reducing the number of the images, or outputs the object recognition result after reducing the number of the object recognition results, according to a difference in processing time.

0045 More specifically, when object recognition processing takes a longer time than signal processing, and when the object recognition processing takes n times longer than the signal processing, the controller 201 controls the signal processing section 204 such that an image is output after the number of the images is reduced every n frames, and such that a current image and an object recognition result of an image of a frame that is n frames before the frame of the current image are output in association with each other. Further, the controller 201 may cause the buffer 206 to buffer an image until an object recognition result is obtained, and may cause the obtained object recognition result to be output together with the image at a timing at which the object recognition result is obtained. In this case, the image is also output according to the timing at which the object recognition result is obtained. Thus, the number of the images is also reduced every n frames.

0046 Further, when object recognition processing takes a shorter time than signal processing, and when the object recognition processing takes n times shorter than the signal processing, the controller 201 controls the recognition section 205 such that an object recognition result is output once every n times, and the obtained object recognition result and a current image are output in association with each other.

### 0047 <Configuration of Recognition Section>

With respect to an image supplied by the signal processing section 204, the recognition section 205 obtains an object recognition result for each pixel to output the obtained object recognition result.

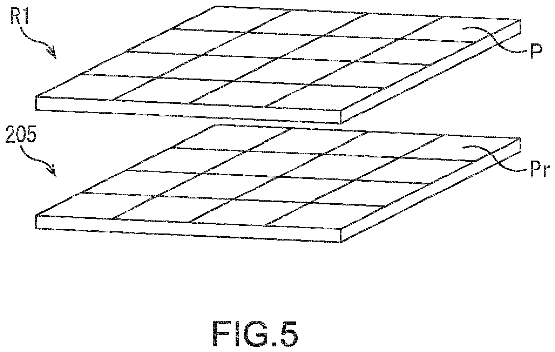

0048 In other words, as illustrated in Fig. 5, the recognition section 205 performs object recognition processing, such as semantic segmentation, for each pixel P of an image R1 output by the signal processing section 204, and outputs an object recognition result Pr for each pixel P.

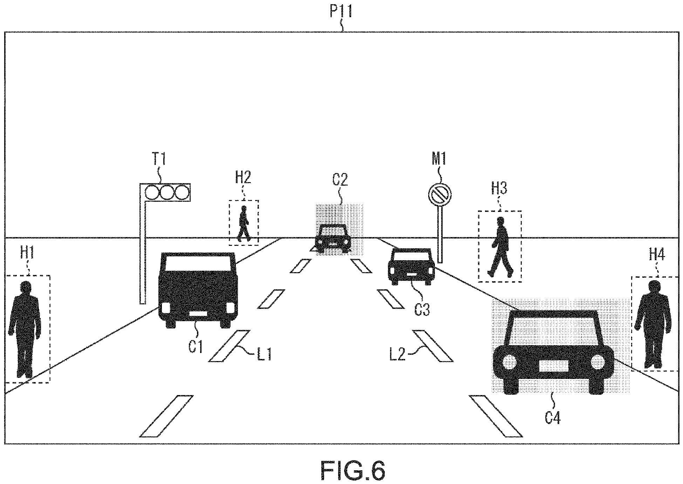

0049 More specifically, when, for example, an image P11 illustrated in Fig. 6 is captured, the object recognition processing is performed to recognize, for example, pedestrians H1 to H4, vehicles C1 to C4, white lines L1 and L2, a traffic light T1, and a sign M1.

0050 Further, with respect to each of the pedestrians H1 to H4, the vehicles C1 to C4, the white lines L1 and L2, the traffic light T1, and the sign M1 that are the object recognition results of Fig. 6, a coordinate position and an identification name (for example, person, vehicle, white line, traffic light, or sign) are set at, for example, the position of the center of gravity of a region of pixels making up an object.

### 0051 <Sensing Processing Performed by Data Acquisition Section of Fig. 4>

Next, sensing processing performed by the data acquisition section 102 of Fig. 4 is described.

0052 In Step S11, under the control of the controller 201, the image sensor 203 captures an image of the surroundings of the vehicle 91 on the basis of light entering through the lens 202, and outputs, to the signal processing section 204, a signal for each pixel on which the image-capturing has been performed.

0053 In Step S12, under the control of the controller 201, the signal processing section 204 performs signal processing, such as demosaic processing, denoising, and a tone correction, with respect to the signal for each pixel that is supplied by the image sensor 203, and generates an image to output the generated image to the recognition section 205, the buffer 206, and the determination section 207.

0054 In Step S13, the buffer 206 buffers the image signal output by the signal processing section 204.

0055 In Step S14, the recognition section 205 performs an object recognition for each pixel on the basis of the image supplied by the signal processing section 204.

0056 In Step S15, the buffer 206 outputs the buffered image to the automated driving controller 112.

0057 In Step S16, the recognition section 205 outputs a result of the recognition to the automated driving controller 112 and the determination section 207 through an in-vehicle network, as described with reference to Fig. 6.

0058 In other words, due to the processes of Steps S15 and S16 being performed, an image and an object recognition result that are associated with each other are output to the automated driving controller 112.

0059 In Step S17, the determination section 207 compares the time for the signal processing performed by the signal processing section 204 and the time for the object recognition processing performed by the recognition section 205, and determines whether the object recognition processing performed by the recognition section 205 takes a longer time than the signal processing performed by the signal processing section 204.

0060 When it has been determined, in Step S17, that the object recognition processing performed by the recognition section 205 takes a longer time than the signal processing performed by the signal processing section 204, the process moves on to Step S18.

0061 In Step S18, the determination section 207 notifies the controller 201 that the object recognition processing performed by the recognition section 205 takes a longer time than the signal processing performed by the signal processing section 204. In response to this notification, the controller 201 controls the signal processing section 204 such that an image that is a signal processing result output by the signal processing section 204 is output after the number of the images is reduced according to a difference in processing time between the signal processing performed by the signal processing section 204 and the object recognition processing performed by the recognition section 205.

0062 In Step S19, it is determined whether an instruction to terminate the processing has been given, and when it has been determined that the instruction to perform the termination has not been given, the process returns to Step S11.

0063 Further, when it has been determined, in Step S17, that the object recognition processing performed by the recognition section 205 does not take a longer time than the signal processing performed by the signal processing section 204, the process moves on to Step S20.

0064 In Step S20, the determination section 207 compares the time for the signal processing performed by the signal processing section 204 and the time for the object recognition processing performed by the recognition section 205, and determines whether the object recognition processing performed by the recognition section 205 takes a shorter time than the signal processing performed by the signal processing section 204.

0065 When it has been determined, in Step S20, that the object recognition processing performed by the recognition section 205 takes a shorter time than the signal processing performed by the signal processing section 204, the process moves on to Step S21.

0066 In Step S21, the determination section 207 notifies the controller 201 that the object recognition processing performed by the recognition section 205 takes a shorter time than the signal processing performed by the signal processing section 204. In response to this notification, the controller 201 controls the recognition section 205 such that an object recognition result is output after the number of the object recognition results is reduced according to a difference in processing time between the signal processing performed by the signal processing section 204 and the object recognition processing performed by the recognition section 205.

0067 Then, when it has been determined, in Step S20, that the object recognition processing performed by the recognition section 205 does not take a shorter time than the signal processing performed by the signal processing section 204, that is, when the object recognition processing and the signal processing take almost the same amount of time, the process moves on to Step S19, and the control performed such that the processing of reduction in number is performed by the signal processing section 204, and the control performed such that the processing of reduction in number is performed by the recognition section 205, are not performed.

0068 The processing described above makes it possible to adjust the timing and to appropriately output an object recognition result and a captured image by reducing the number of the object recognition results or the number of the captured images according to a difference in processing time between signal processing performed by the signal processing section 204 and object recognition processing performed by the recognition section 205.

0069 The example of outputting both data of an object recognition result and data of an image to the automated driving controller 112 has been described above. However, only an object recognition result may be output to the automated driving controller 112 when automated driving is controlled only using the object recognition result. This makes it possible to reduce an amount of data flowing through an in-vehicle network, and thus to improve a communication speed.

0070 Further, there is no need to perform processing of recognizing an object from an image. Thus, the sensor section 200 may output a low-resolution image and an object recognition result to the automated driving controller 112.

0071 The example of outputting all of the object recognition results has been described above. However, from among object recognition results, only an object recognition result of an object of relatively high importance that is necessary to control automated driving may be output. Here, examples of the object of relatively high importance include a target object necessary to grasp a traffic condition, and a collision or contact target object. Specifically, examples of the object of relatively high importance include a traffic light, a road sign, a vehicle, a pedestrian, a bicycle, and a motorcycle. Further, an object recognition result of an object of low importance does not necessarily have to be output. For example, a recognition result of the sky does not necessarily have to be output since the recognition result of the sky is not indispensable for controlling automated driving.

0072 This makes it possible to cause an image and an object recognition result that are necessary to control automated driving to flow into the automated driving controller 112, while suppressing an amount of data flowing through an in-vehicle network.

0073 The example in which an image is output after the number of images is reduced according to a difference in processing time when object recognition processing takes a longer time than signal processing, has been described above. However, a current image and an object recognition result of an image of a frame that is several frames before the frame of the current image may be output in association with each other without reducing the number of images. This results in reducing the accuracy of an object recognition result, but in there being no need to reduce the frame rate.

### 0074 <<4. Second Embodiment>>

The example in which the sensor section 200 performs object recognition processing on the basis of an image captured by the image sensor 203, and outputs, to the automated driving controller 112, a result of the object recognition and the image that are associated with each other, has been described above. However, the sensor section 200 may further include a plurality of sensors capable of sensing other information, and may add results of the sensing performed by the plurality of sensors to an object recognition result and output the sensing results and an object recognition result.

0075 For example, in addition to the image sensor 203, a millimeter-wave radar and LiDAR may be included in the sensor section 200, and information regarding a speed of an object and information regarding a distance to the object that are respectively obtained from a result of sensing performed by the millimeter-wave radar and a result of sensing performed by the LiDAR, may be added to each objection recognition result as metadata.

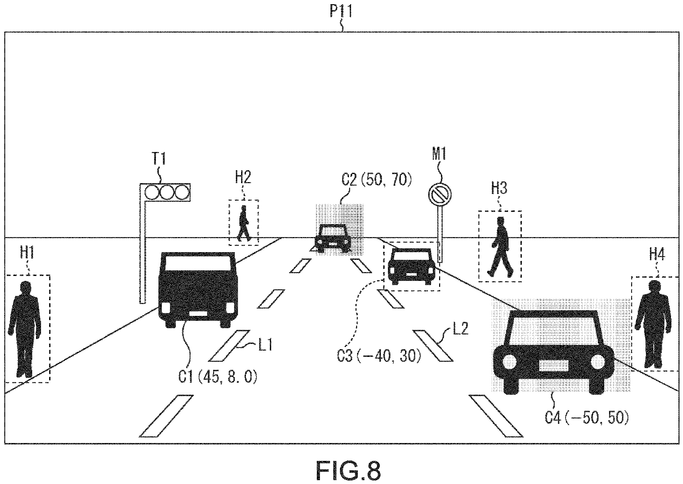

0076 In other words, as illustrated in, for example, Fig. 8, the pedestrians H1 to H4, the vehicles C1 to C4, the white lines L1 and L2, the traffic light T1, and the sign M1 are recognized by object recognition processing being performed by the processing described above.

0077 Here, the sensor section 200 further includes a millimeter-wave radar and LiDAR, and then, information regarding a speed of an object and information regarding a distance to the object are added as metadata to each object, the object being a moving object, from among object recognition results, that can be sensed with a specified degree of accuracy.

0078 In this case, examples of the moving object, from among object recognition results, that can be sensed with a specified degree of accuracy include the vehicles C1 to C4. It is known that a radio wave in the millimeter-wave band can be easily transmitted through, for example, the pedestrians H1 to H4, and information regarding detectable speeds of the pedestrians H1 to H4 exhibits a low degree of accuracy.

0079 As described above, with respect to a moving object that can be sensed with a specified degree of accuracy, more detailed information regarding the object necessary to control automated driving is obtained by adding speed information and distance information to the object as metadata. Note that, in particular, an object to which metadata is added, such as the object that can be sensed with a specified degree of accuracy, is hereinafter also referred to as an object in need of addition of metadata.

0080 In Fig. 8, a speed (V) and a distance (D) are added to each of the vehicles C1 to C4 as indicated by (V,D) in the figure.

0081 More specifically, H1 (45, 8.0) is given to the vehicle C1, and indicates that a moving speed of the vehicle C1 is 45 km/h and the distance to the vehicle C1 from the own automobile is 8.0 m. Further, C2(50,70) is given to the vehicle C2, and indicates that the moving speed of the vehicle C2 is 50 km/h and the distance to the vehicle C2 from the own automobile is 70 m.

C3 (-40, 30) is given to 0082 the vehicle C3, and indicates that the moving speed of the vehicle C3 is -40 km/h and the distance to 0083 the vehicle C3 from the own automobile is 30 m. Further, C4(-50,5.0) is given to the vehicle C4, and indicates that the moving speed of the vehicle C4 is -50 km/h and the distance to the vehicle C4 from the own automobile is 5.0 m.

0084 Note that, the fact that "-" is given to the figure of the speed indicates that the direction is opposite to a traveling direction of the own automobile, and indicates that the vehicles C3 and C4 are oncoming vehicles.

0085 Further, the representation in Fig. 8 is representation for describing a correspondence with an image recognition result, and in fact, information regarding a speed of an object and information regarding a distance to the object that are associated with a corresponding object recognition result are added to the object recognition result as metadata.

0086 The example in which a moving object that can be sensed with a specified degree of accuracy using a millimeter-wave radar 221 is set to be an object in need of addition of metadata, the object in need of addition of metadata being an object to which metadata is added, has been described above. However, metadata may be added to an object of relatively high importance that is necessary to control automated driving. Examples of the object of relatively high importance include a target object necessary to grasp a traffic condition, and a collision or contact target object. Specifically, examples of the object of relatively high importance include a traffic light, a road sign, a vehicle, a pedestrian, a bicycle, and a motorcycle. Further, of course, all of the results of object recognitions performed by the millimeter-wave radar 221 and LiDAR 222 may be set to be objects in need of addition of metadata.

### 0087 <Example of Configuration of Sensor Section in Which Speed Information and Distance Information are Added to Object Recognition Result>

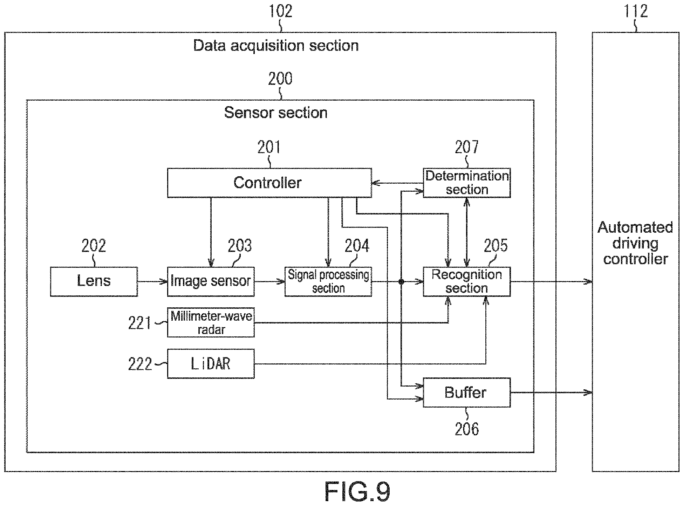

Next, an example of a configuration of a second embodiment that reduces an amount of data of a sensing results that flows through an in-vehicle network is described with reference to a block diagram of Fig. 9.

0088 Note that, from among the examples of the functional configurations implementing the vehicle control system 100 described with reference to Fig. 3, Fig. 9 illustrates an example of a configuration of the data acquisition section 102 reducing an amount of data of a sensing result that flows through an in-vehicle network, and further adding information regarding a speed and a distance to a moving object, from among objects of object recognition results, that can be sensed with a specified degree of accuracy.

0089 Further, a structural element in the data acquisition section 102 of Fig. 9 that includes the same function as a structural element in the data acquisition section 102 of Fig. 4 is denoted by the same reference numeral as Fig. 4, and a description thereof is omitted as appropriate.

0090 In other words, the millimeter-wave radar 221 and the LiDAR 222 are newly added to the data acquisition section 102 of Fig. 9.

0091 The millimeter-wave radar 221 irradiates a radio wave in the millimeter-wave band, receives the wave reflected off an object, detects a distance to and a speed of the object on the basis of a going-and-returning period of time from the radio wave being irradiated to the reflected wave with peak intensity being received, and outputs the detected distance and speed to the recognition section 205.

0092 The LiDAR 222 emits laser light of infrared light, receives the light reflected off an object, detects information regarding a distance to the object on the basis of a going-and-returning period of time from a timing of emitting the laser light to a timing of receiving the laser light, and outputs the detected information to the recognition section 205 as three-dimensional group-of-points information.

0093 The recognition section 205 adds, as metadata, the speed information and the distance information to a moving object, from among object recognition results, that can be sensed with a specified degree of accuracy, registers to store therein the metadata in association with the object recognition result, and outputs them to the automated driving controller 112.

0094 Further, after the speed information and the distance information are registered in association with the object recognition result, the recognition section 205 estimates the location of the object on the basis of the most recent and current pieces of speed information supplied by the millimeter-wave radar 221 and the most recent and current pieces of distance information supplied by the LiDAR 222 even in a state in which the object is not allowed to be detected from an image due to image artifacts or insufficient brightness of the image.

0095 Note that, from among objects for which speed information and distance information are registered in association with an object recognition result, an object that is not allowed to be detected from an image due to image artifacts or insufficient brightness of the image is hereinafter also referred to as a non-detectable object. Further, a moving object that can be sensed with a specified degree of accuracy is also referred to as a metadata-added object.

### 0096 <Sensing Processing Performed by Data Acquisition Section of Fig. 9>

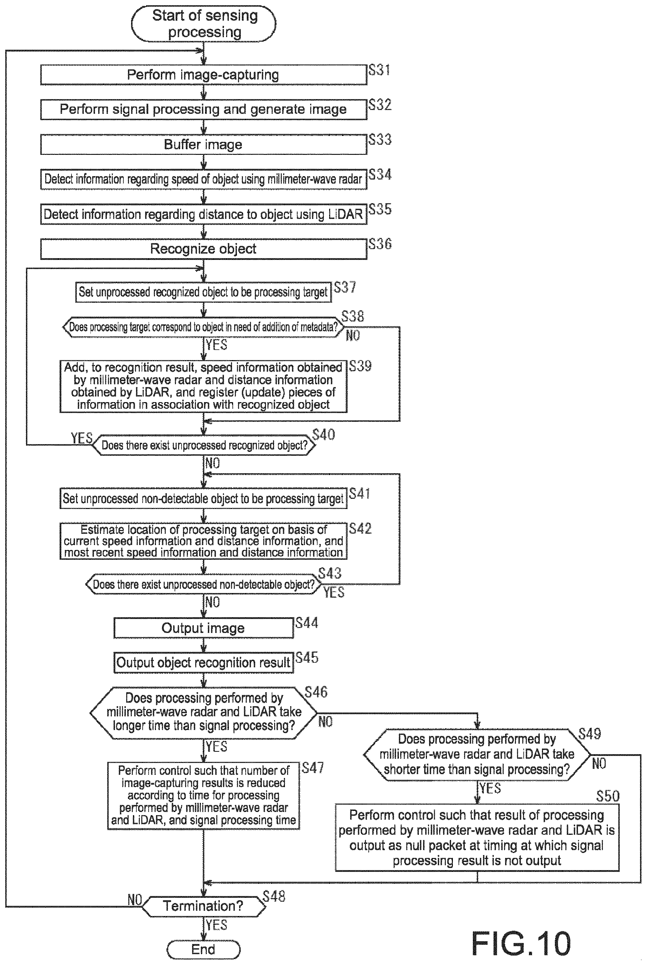

Next, sensing processing performed by the data acquisition section 102 of Fig. 9 is described with reference to a flowchart of Fig. 10.

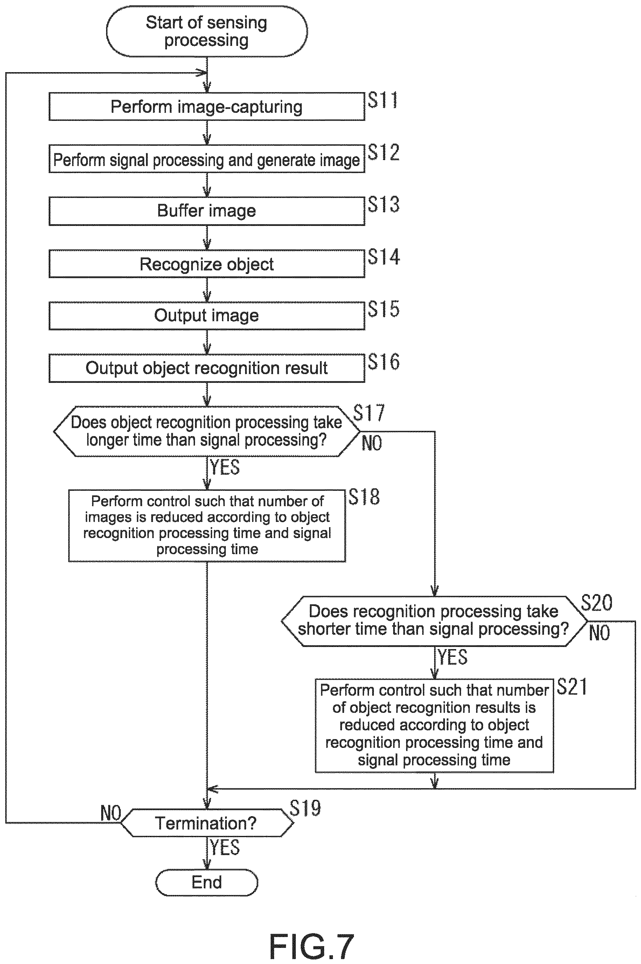

0097 Note that the processes of Steps S31 to S33 and S36 in the flowchart of Fig. 9 are similar to the processes of Steps S11 to S14 in the flowchart of Fig. 7. Thus, descriptions thereof are omitted.

0098 That is, in Step S34, the millimeter-wave radar 221 irradiates a radio wave in the millimeter-wave band onto the surroundings of the vehicle 91, detects information regarding a speed of an object on the basis of a reflected wave with peak intensity, and outputs the detected speed information to the recognition section 205.

0099 In Step S35, the LiDAR 222 emits laser light of infrared light, receives the light reflected off the object, detects three-dimensional group-of-points information that is information regarding a distance to the object on the basis of a going-and-returning period of time of the laser light, and outputs the detected information to the recognition section 205.

0100 In Step S36, the recognition section 205 performs an object recognition for each pixel on the basis of an image supplied by the signal processing section 204.

0101 In Step S37, the recognition section 205 sets an unprocessed recognized object to be a processing-target object.

0102 In Step S38, the recognition section 205 determines whether the processing-target object is a moving object that can be sensed with a specified degree of accuracy, that is, an object in need of addition of metadata. Here, examples of the moving object in need of addition of metadata that can be sensed with a specified degree of accuracy include a vehicle. Note that any object can be set to be the object in need of addition of metadata, and, for example, not only a vehicle but also all of the objects may be set to be the objects in need of addition of metadata.

0103 When it has been determined, in Step S38, that the processing-target object is an object in need of addition of metadata, the process moves on to Step S39.

0104 In Step S39, the recognition section 205 adds the speed information supplied by the millimeter-wave radar 221 and the distance information supplied by the LiDAR 222 to the processing-target object as metadata, and registers (updates) to store therein the metadata in association with the processing-target object.

0105 Note that, when it has been determined, in Step S38, that the processing-target object is not an object in need of addition of metadata, the process of Step S39 is skipped and the metadata is not added.

0106 In Step S40, the recognition section 205 determines whether there exists an unprocessed recognized object from among object recognition results, and when it has been determined that there exists an unprocessed recognized object, the process returns to Step S37.

0107 In Step S41, the recognition section 205 sets one of non-detectable objects from among the registered object recognition results to be a processing-target non-detectable object.

0108 In Step S42, the recognition section 205 estimates the current location of the non-detectable object on the basis of current speed information and distance information regarding the non-detectable object, and most recent speed information and distance information regarding the non-detectable object, and, on the assumption that an object recognition result of the non-detectable object exists in the estimated location, the recognition section 205 registers thereon the current speed information and distance information in association with each other.

0109 Note that speed information and distance information in a location that is predicted on the basis of speed information and distance information in a most recent location of the processing-target non-detectable object are used as the current speed information and distance information regarding the processing-target non-detectable object.

0110 Further, when current speed information and distance information corresponding to a processing-target non-detectable object are not detected, it is determined that there does not exist the object itself. Thus, the recognition section 205 cancels the registration of the processing-target non-detectable object and the registration of the speed information and distance information that are registered in association with the processing-target non-detectable object.

0111 In Step S43, the recognition section 205 determines whether there exists an unprocessed non-detectable object, and when it has been determined that there exists the unprocessed non-detectable object, the process returns to Step S41. In other words, with respect to all of the non-detectable objects, the processes of Steps S41 to S43 are repeated until the current location is estimated on the basis of corresponding speed information and distance information.

0112 When it has been determined, in Step S43, that there exists no unprocessed non-detectable object, the process moves on to Step S44.

0113 In Step S44, the buffer 206 outputs a buffered image to the automated driving controller 112.

0114 In Step S45, as described above with reference to Fig. 8, the recognition section 205 outputs a recognition result to the automated driving controller 112 and the determination section 207 through an in-vehicle network, the recognition result being obtained by adding metadata including information regarding a speed and a distance to an object of high importance.

0115 In Step S46, the determination section 207 compares the time for the processing performed by the millimeter-wave radar 221 and the LiDAR 222 and the time for the signal processing performed by the signal processing section 204, and determines whether the processing performed by the millimeter-wave radar 221 and the LiDAR 222 takes a longer time than the signal processing performed by the signal processing section 204.

When it has been determined, in Step S46, that the processing performed by the millimeter-wave radar 221 and the LiDAR 222 takes a longer time than the signal processing performed by the signal processing section 204, the process moves on to Step S47.

In Step S47, the determination section 207 notifies the controller 201 that the processing performed by the millimeter-wave radar 221 and the LiDAR 222 takes a longer time than the signal processing performed by the signal processing section 204. In response to this notification, the controller 201 controls the signal processing section 204 such that an image that is a signal processing result output by the signal processing section 204 is output after the number of the images is reduced according to a difference in processing time between the signal processing performed by the signal processing section 204 and the processing performed by the millimeter-wave radar 221 and the LiDAR 222.

In Step S48, it is determined whether an instruction to terminate the processing has been given, and when it has been determined that the instruction to perform the termination has not been given, the process returns to Step S31. Further, when it has been determined, in Step S48, that the instruction to perform the termination has been given, the processing is terminated.

Further, when it has been determined, in Step S46, that the processing performed by the millimeter-wave radar 221 and the LiDAR 222 does not take a longer time than the signal processing performed by the signal processing section 204, the process moves on to Step S49. 0116

In Step S49, the determination section 207 compares the time for the processing performed by the millimeter-wave radar 221 and the LiDAR 222 and the time for the signal processing performed by the signal processing section 204, and determines whether the processing performed by the millimeter-wave radar 221 and the LiDAR 222 takes a shorter time than the signal processing performed by the signal processing section 204.0117

When it has been determined, in Step S49, that the processing performed by the millimeter-wave radar 221 and the LiDAR 222 takes a shorter time than the signal processing performed by the signal processing section 204, the process moves on to Step S50.0118

In Step S50, the determination section 207 notifies the controller 201 that the processing performed by the millimeter-wave radar 221 and the LiDAR 222 takes a shorter time than the signal processing performed by the signal processing section 204. In response to this notification, the controller 201 controls the recognition section 205 such that a result of the processing performed by the millimeter-wave radar 221 and the LiDAR 222 is output as a null packet at a timing at which an image that is a signal processing result output by the signal processing section 204 is not output.

0119 Then, when it has been determined, in Step S49, that the processing performed by the millimeter-wave radar 221 and the LiDAR 222 does not take a shorter time than the signal processing performed by the signal processing section 204, that is, when the processing performed by the millimeter-wave radar 221 and the LiDAR 222 and the signal processing take almost the same amount of time, the process moves on to Step S48, and the control performed such that the processing of reduction in number is performed by the signal processing section 204, and the control performed such that the processing result is output by the recognition section 205 as a null packet, are not performed.

0120 According to the processing described above, speed information and distance information are added as metadata to an object in need of addition of metadata, from among object recognition results, that is a moving object that can be sensed with a specified degree of accuracy, and the speed information and the distance information are registered (updated) in association with the object recognition result. This enables the automated driving controller 112 to control automated driving in consideration of a movement speed and distance information in addition to information regarding coordinates in an image with respect to a moving object in need of addition of metadata that can be sensed with a specified degree of accuracy.

This makes it possible to cause an image and an object recognition result that are necessary to control automated driving to flow into the automated driving controller 112, while suppressing an amount of data flowing through an in-vehicle network.0121

0122 Further, after speed information and distance information are registered in association with an object recognition result, the location is estimated even in a state in which an object recognition result is not obtained from an image, on the basis of speed information and distance information that have been registered in association with each other until the last minute and on the basis of current speed information and distance information, and speed information and distance information are registered in association with an object recognition result in the estimated location.

0123 Consequently, even in a state in which an object recognition result is not obtained due to problems in an image, such as artifacts of an image captured by the image sensor 203, an insufficient brightness of the image, or a blind in the image due to a wiper blade, it is possible to continuously acquire the object recognition result on the basis of speed information obtained by the millimeter-wave radar 221 and distance information obtained by the LiDAR 222.

0124 Further, when the processing performed by the millimeter-wave radar 221 and the LiDAR 222 takes a longer time than the signal processing performed by the signal processing section 204, the signal processing section 204 is controlled, and an image that is a signal processing result is output after the number of the images is reduced according to a difference in processing time.

0125 Furthermore, when the processing performed by the millimeter-wave radar 221 and the LiDAR 222 takes a shorter time than the signal processing performed by the signal processing section 204, the recognition section 205 is controlled, and a result of the processing performed by the millimeter-wave radar 221 and the LiDAR 222 at a timing at which an image that is a signal processing result is not output, is output as a null packet.

0126 Accordingly, speed information obtained by the millimeter-wave radar 221 and distance information obtained by the LiDAR 222 are adjusted to a timing corresponding to a speed of processing performed by the signal processing section 204 or a timing corresponding to a speed of processing performed by the millimeter-wave radar 221 and the LiDAR 222, and are output.

### 0127 <<5. Third Embodiment>>>

The example in which speed information and distance information are added as metadata to an object in need of addition of metadata, from among object recognition results, that is a moving object that can be sensed with a specified degree of accuracy, and the object in need of addition of metadata and the added metadata are output, has been described above. However, a plurality of sensor sections 200 may be provided to the vehicle 91 to detect information regarding a region all around the vehicle 91.

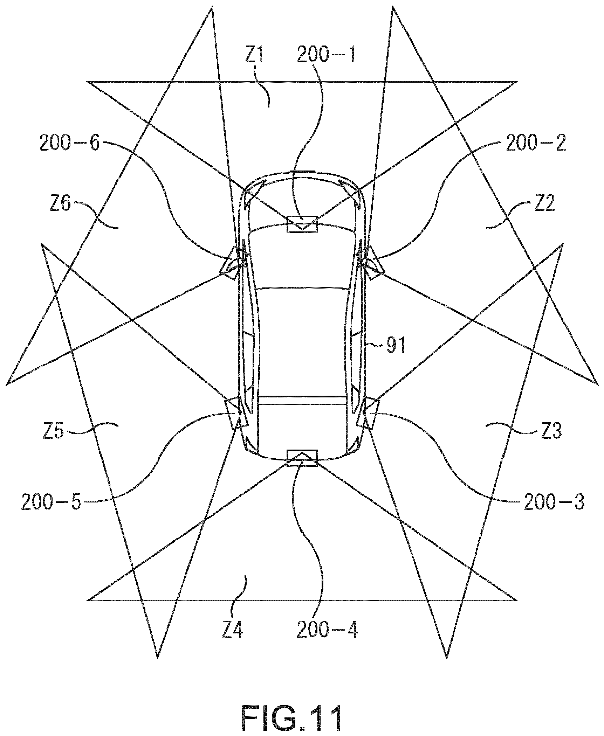

0128 More specifically, as illustrated in, for example, Fig. 11, sensor sections 200-1 to 200-6 may be provided such that it is possible to perform sensing with respect to a region all around the vehicle 91 that includes a range Z1 situated just ahead of the vehicle 91, a range Z2 situated ahead of the right side thereof, a range Z3 situated behind the right side thereof, a range Z4 situated just behind the vehicle 91, a range Z5 situated behind the left side thereof, and a range Z6 situated ahead of the left side thereof.

0129 Then, results of sensing performed by the respective sensor sections 200-1 to 200-6 are integrated and a result of the integration is output to the automated driving controller 112.

0130 That is, object recognition results of the respective sensor sections 200-1 to 200-6 may be output in association with respective pieces of information regarding the sensing-target ranges Z1 to Z6 as viewed from the vehicle 91.

0131 Further, coordinates when the surroundings of the vehicle 91 are represented by a two-dimensional plane may be set, and object recognition results of the respective sensor sections 200-1 to 200-6 may be output in the form of a single piece of map information in a state in which the object recognition results are each associated with coordinates in the two-dimensional plane representing the surroundings of the vehicle 91.

0132 Furthermore, in order to reduce an amount of data flowing through an in-vehicle network, data output to the automated driving controller 112 may be changed according to the driving state or operation states of the millimeter-wave radar 221 and the LiDAR 222.

0133 For example, when the traveling speed is constant and when the positional relationship with a surrounding vehicle remains unchanged for a specified period of time, not all of the results of sensing performed in all directions are necessary, and only a sensing result supplied by the sensor section 200-1 used to perform sensing with respect to the range Z1 situated in a traveling direction may be output. A mode in which only a result of sensing performed in some of the directions is output, as described above, is hereinafter also referred to as a low-load mode.

0134 Further, when there is a problem in operation states of the millimeter-wave radar 221 and the LiDAR 222 of each of the sensor sections 200-1 to 200-6, results of sensing performed in all directions may be output regardless of the driving state. A mode in which only results of sensing performed in all directions are output is hereinafter also referred to as a high-load mode.

### 0135 <Example of Configuration of Data Acquisition Section in Which Information Regarding Region All Around Vehicle is Detected>

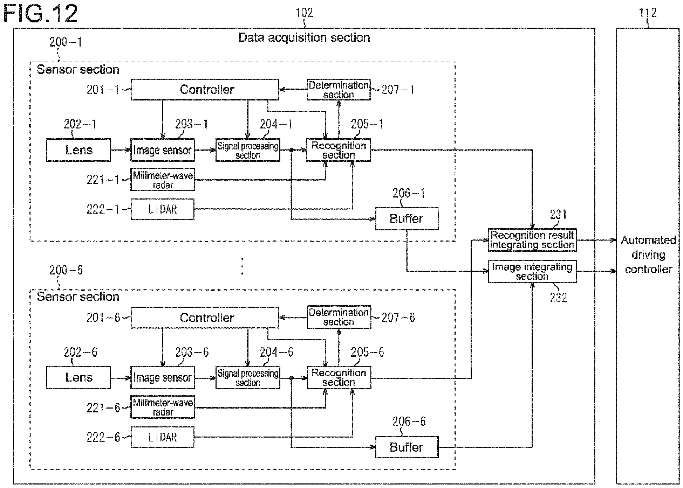

Next, an example of a configuration of a third embodiment of the data acquisition section 102 in which information regarding a region all around a vehicle is detected is described with reference to a block diagram of Fig. 12.

0136 Note that, a structural element in the example of the configuration of the data acquisition section 102 of Fig. 12 that includes the same function as a structural element in the data acquisition section 102 of Fig. 9 is denoted by the same reference numeral as Fig. 9, and a description thereof is omitted as appropriate.

0137 That is, the data acquisition section 102 of Fig. 12 is different from that of Fig. 9 in including the sensor sections 200-1 to 200-6 each having the same configuration as the sensor section 200 such that it is possible to perform sensing with respect to the ranges Z1 to Z6 that are a region all around the vehicle 91, as illustrated in Fig. 11, and in including a recognition result integrating section 231 and an image integrating section 232.

0138 The recognition result integrating section 231 acquires object recognition results respectively supplied by the sensor sections 200-1 to 200-6, and outputs the object recognition results to the automated driving controller 112 in a state in which the object recognition results are respectively associated with pieces of information regarding the ranges Z1 to Z6.

0139 The image integrating section 232 outputs, to the automated driving controller 112, images respectively supplied by the sensor sections 200-1 to 200-6 in a state in which the images are respectively associated with the pieces of information regarding the ranges Z1 to Z6.

0140 Alternatively, the recognition result integrating section 231 may acquire object recognition results respectively supplied by the sensor sections 200-1 to 200-6, and may output the object recognition results in the form of a single piece of map information in a state in which the object recognition results are each associated with coordinates in the two-dimensional plane representing the surroundings of the vehicle 91.

0141 Further, when the traveling speed is constant and when the positional relationship with a surrounding vehicle remains unchanged for a specified period of time, not all of the results of sensing performed in all directions are necessary. Thus, the recognition result integrating section 231 only outputs an objection recognition result supplied by the sensor section 200-1 used to perform sensing with respect to the range Z1 situated in a traveling direction.

0142 In this case, the image integrating section 232 also only outputs an image supplied by the sensor section 200-1 used to capture an image of the range Z1 situated in the traveling direction.

0143 Further, when there is a problem in operation states of the millimeter-wave radar 221 and the LiDAR 222 of each of the sensor sections 200-1 to 200-6, the recognition result integrating section 231 outputs results of objection recognitions performed in all directions regardless of the driving state.

0144 In this case, the image integrating section 232 also outputs all of the images supplied by the sensor sections 200-1 to 200-6 that are used to perform image-capturing in all directions.

### 0145 <Integration Processing>

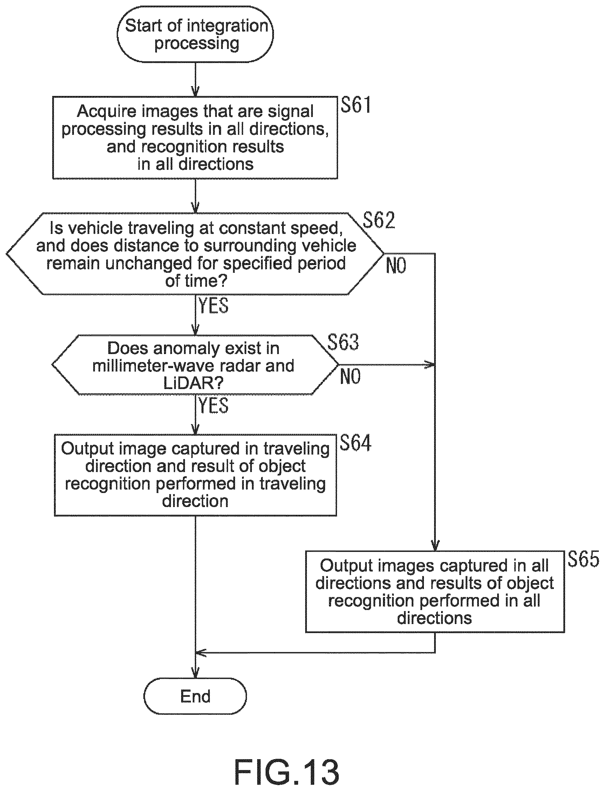

Next, processing of integration performed by the data acquisition section 102 of Fig. 12 is described with reference to a flowchart of Fig. 13. Note that this processing is performed on the assumption that the sensing processing described with reference to the flowchart of Fig. 10 is performed in each of the sensor sections 200-1 to 200-6.

0146 In Step S61, the recognition result integrating section 231 acquires object recognition results respectively supplied by the sensor sections 200-1 to 200-6. The image integrating section 232 similarly acquires images respectively supplied by the sensor sections 200-1 to 200-6.

0147 In Step S62, on the basis of the object recognition result to which metadata including speed information and distance information has been added, the recognition result integrating section 231 determines whether the vehicle 91 is traveling at a constant speed and whether a distance to a surrounding vehicle remains unchanged for a specified period of time.

0148 When it has been determined, in Step S62, that the vehicle 91 is traveling at the constant speed and the distance to the surrounding vehicle remains unchanged for the specified period of time, the process moves on to Step S63.

0149 In Step S63, on the basis of whether there exist the speed information supplied by the millimeter-wave radar 221 and the distance information supplied by the LiDAR 222, the recognition result integrating section 231 determines whether there is an anomaly in operation states of the millimeter-wave radar 221 and the LiDAR 222.

0150 When it has been determined, in Step S63, that there is no anomaly in the operating states of the millimeter-wave radar 221 and the LiDAR 222, the process moves on to Step S64.

0151 In Step S64, the recognition result integrating section 231 only outputs, to the automated driving controller 112, the object recognition result supplied by the sensor section 200-1 used to perform sensing with respect to the range Z1 situated in a traveling direction (low-load mode). Further, the image integrating section 232 only outputs, to the automated driving controller 112, the image supplied by the sensor section 200-1 used to perform sensing with respect to the range Z1 situated in the traveling direction.

0152 Further, when it has been determined, in Step S62, that the vehicle 91 is not traveling at the constant speed or the distance from the surrounding vehicle does not remain unchanged for the specified period of time, or when it has been determined, in Step S63, that there is an anomaly in at least one of the operation states of the millimeter-wave radar 221 and the LiDAR 222, the process moves on to Step S65.

0153 In Step S65, the recognition result integrating section 231 outputs the results of the object recognitions performed in all directions, the results of the object recognitions being supplied by the sensor sections 200-1 to 200-6. Further, the image integrating section 232 outputs, to the automated driving controller 112, all of the images supplied by the sensor sections 200-1 to 200-6 (high-load mode).

0154 Due to the series of processes described above being performed, sensing is performed with respect to a range covering a region all around the vehicle 91, and an object recognition result and an image are output to the automated driving controller 112. This makes it possible to more accurately control automated driving.

0155 Further, a sensing range for an object recognition result and an image that are supplied to the automated driving controller 112 is changed according to a traveling state of the vehicle 91 and according to whether there is an anomaly in operation states of the millimeter-wave radar 221 and the LiDAR 222.

0156 More specifically, only an object recognition result and an image for a region situated ahead in a traveling direction are supplied to the automated driving controller 112 in a state at a relatively low risk. This results in being able to reduce a communication load in an in-vehicle network.

0157 Here, examples of the state at a relatively low risk include a state in which the vehicle 91 is traveling at a constant speed and a distance to a surrounding vehicle remains unchanged for a specified period of time, and a state in which there is no anomaly in operation states of the millimeter-wave radar 221 and the LiDAR 222.

0158 The example in which only an object recognition result and an image for a region situated ahead in a traveling direction are output to the automated driving controller 112 in a state at a relatively low risk, has been described above. However, the automated driving control will become unnecessary if there is a decrease in risk. Thus, for example, when the vehicle is traveling at a speed that is slower than a typical walking speed and the vehicle can be stopped anytime with a brake, and further in a state at a low risk, none of an object recognition result and an image may be output to the automated driving controller 112.

### 0159 <<6. Fourth Embodiment>>

The example in which a plurality of sensors 200 is provided for regions in all directions as viewed from the vehicle 91 to integrate a plurality of sensing results and output a result of the integration, has been described above on the assumption that the image sensor 203 performs a single exposure. However, of course, exposure simultaneously performed multiple times (that is, there is a plurality of exposure timings for a period of time of a single frame, and a plurality of images is captured for the period of time of the single frame) may be possible. Image-capturing results at respective sensitivities and results of sensing performed by the millimeter-wave radar 221 and the LiDAR 222 may be selectively used according to the state outside of a vehicle to improve the accuracy in recognition.

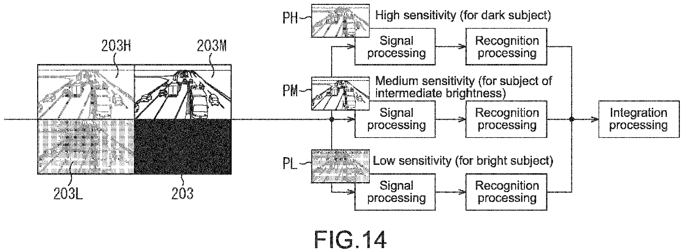

0160 That is, the image sensor 203 on the left in Fig. 14 captures three images for a period of time of a single frame, and is set by performing an image-sensor control such as an adjustment of timings of opening and closing a shutter (that is, an exposure time) for each of a high-sensitivity section 203H, a medium-sensitivity section 203M, and a low-sensitivity section 203L, and a sensor gain adjustment. Thus, in the image sensor 203 of Fig. 14, it is possible to simultaneously capture images PH, PM, and PL of three types of sensitivities.

0161 The high-sensitivity image PH is an image of which an exposure time is longer than a specified time, and is an image for a dark subject. The medium-sensitivity image PM is an image of which an exposure time is shorter than that of the high-sensitivity image PH and is longer than that of the low-sensitivity image PL, and is an image for a subject of intermediate brightness. The low-sensitivity image PL is an image of which an exposure time is shorter than the specified time, and is an image for a bright subject.

0162 Then, signal processing and object recognition processing are performed on the high-sensitivity image PH to obtain a high-sensitivity object recognition result.

0163 Similarly, signal processing and object recognition processing are performed on the medium-sensitivity image PM to obtain a medium-sensitivity object recognition result.

0164 Further, signal processing and object recognition processing are performed on the low-sensitivity image PL to obtain a low-sensitivity object recognition result.

0165 Then, the high-sensitivity object recognition result, the medium-sensitivity object recognition result, the low-sensitivity object recognition result, a result of detection performed by the millimeter-wave radar 221, and a result of detection performed by the LiDAR 222 are selectively used according to the condition in the outside world to improve the accuracy in object recognition.

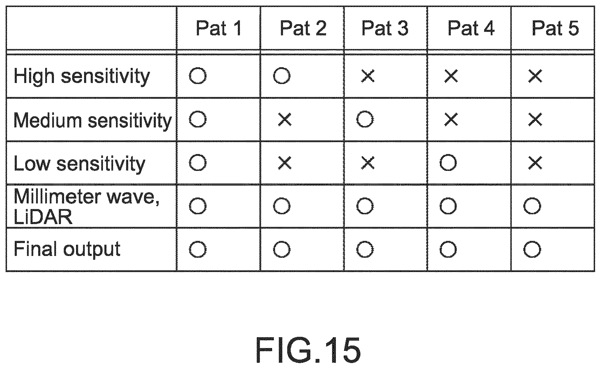

0166 In other words, for example, when the outside world is under the condition that it is sufficiently bright and all of the recognition results can be used, the high-sensitivity object recognition result, the medium-sensitivity object recognition result, the low-sensitivity object recognition result, the result of detection performed by the millimeter-wave radar 221, and the result of detection performed by the LiDAR 222 are integrated to be used, as given in Pat 1 of Fig. 15.

0167 Further, for example, when the outside world is under the condition that it is dark, with a brightness being lower than a specified brightness, the high-sensitivity object recognition result, the result of detection performed by the millimeter-wave radar 221, and the result of detection performed by the LiDAR 222 are integrated to be used, as given in Pat 2 of Fig. 15.

0168 Furthermore, for example, when the outside world is under the condition of backlight, the medium-sensitivity object recognition result, the result of detection performed by the millimeter-wave radar 221, and the result of detection performed by the LiDAR 222 are integrated to be used, as given in Pat 3 of Fig. 15.

0169 Moreover, for example, when the outside world is under the condition that it is too bright, with a brightness being higher than the specified brightness, the low-sensitivity object recognition result, the result of detection performed by the millimeter-wave radar 221, and the result of detection performed by the LiDAR 222 are integrated to be used, as given in Pat 4 of Fig. 15.

0170 Further, for example, when there is dense fog, the result of detection performed by the millimeter-wave radar 221 and the result of detection performed by the LiDAR 222 are integrated to be used, as given in Pat 5 of Fig. 15. However, in this case, it is possible to obtain a location of, a speed of, and a distance to an object, although object recognition processing is not allowed to be performed. Thus, there exists an object in spite of being unknown as an object recognition result, and the location of, the speed of, and the distance to the object in an image are confirmed.

0171 Note that, the types of sensing results used are given in Fig. 15, where the sensing results are, in order from top to bottom, a high-sensitivity object recognition result (High sensitivity), a medium-sensitivity object recognition result (Medium sensitivity), a low-sensitivity object recognition result (Low sensitivity), and results of recognition performed by the millimeter-wave radar 221 and the LiDAR 222 (Millimeter-wave, LiDAR). An item indicating whether an object recognition result can be obtained is given in a lowermost portion. Further, the types of the sensing results selected and respectively corresponding to the types of the patterns Pat 1 to Pat 5 are indicated by circles in order from left to right, and a cross indicates that selection is not performed.

### 0172 <Example of Configuration of Data Acquisition Section in Which Images Captured with Plurality of Different Sensitivities, and Results of Sensing Performed by Millimeter-Wave Radar and LiDAR are Selected According to State Outside of Vehicle>

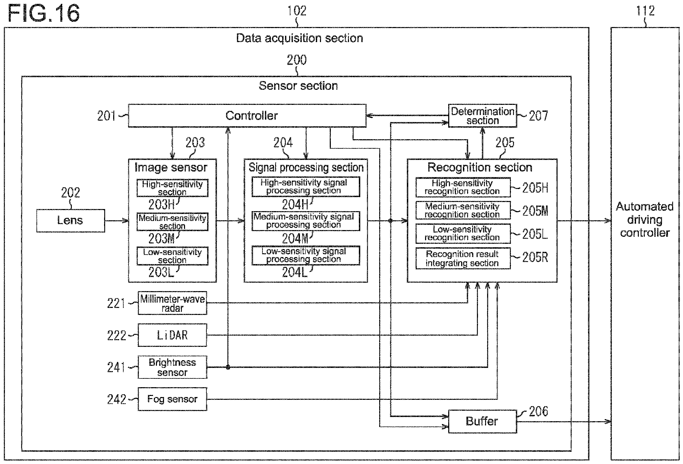

Next, an example of a configuration of a fourth embodiment of the data acquisition section 102 in which images captured with a plurality of different sensitivities, and results of sensing performed by the millimeter-wave radar 221 and the LiDAR 222 are selected according to the state outside of a vehicle, is described with reference to Fig. 16.

0173 The data acquisition section 102 of Fig. 16 is different from the data acquisition section 102 of Fig. 9 in that each of the image sensor 203, the signal processing section 204, and the recognition section 205 includes structural elements used to perform processing on the high-sensitivity image PH, the medium-sensitivity image PM, and the low-sensitivity image PL, and in further including an brightness sensor 241 that detects brightness, and a fog sensor 242 that detects fog.

0174 As illustrated in Fig. 14, the image sensor 203 includes the high-sensitivity section 203H, the medium-sensitivity section 203M, and the low-sensitivity section 203L. The image sensor 203 can simultaneously capture images of different sensitivities applying different exposure times, and outputs the respective images to the signal processing section 204.

0175 Note that Fig. 14 illustrates an example in which the three levels are set for the sensitivity, but the sensitivity may be divided into two levels, or four or more levels.

0176 Correspondingly to the number into which the image sensor 203 has been divided, the signal processing section 204 includes a high-sensitivity signal processing section 204H, a medium-sensitivity signal processing section 204M, and a low-sensitivity signal processing section 204L. The high-sensitivity signal processing section 204H, the medium-sensitivity signal processing section 204M, and the low-sensitivity signal processing section 204L perform signal processing on the high-sensitivity image PH, the medium-sensitivity image PM, and the low-sensitivity image PL that are respectively supplied by the high-sensitivity section 203H, the medium-sensitivity section 203M, and the low-sensitivity section 203L, and output the respective images to the recognition section 205.

0177 Correspondingly to the number into which the image sensor 203 has been divided, the recognition section 205 includes a high-sensitivity recognition section 205H, a medium-sensitivity recognition section 205M, a low-sensitivity recognition section 205L, and a recognition result integrating section 205R. The high-sensitivity recognition section 205H, the medium-sensitivity recognition section 205M, and the low-sensitivity recognition section 205L perform object recognition processing on the basis of the high-sensitivity image PH, the medium-sensitivity image PM, and the low-sensitivity image PL, which are signal processing results respectively supplied by the high-sensitivity signal processing section 204H, the medium-sensitivity signal processing section 204M, and the low-sensitivity signal processing section 204L, and output respective resulting object recognition results to the recognition result integrating section 205R.

0178 As described with reference to Fig. 15, the recognition result integrating section 205R selectively uses the object recognition results of the high-sensitivity signal processing section 204H, the medium-sensitivity signal processing section 204M, and the low-sensitivity signal processing section 204L; and results of sensing performed by the millimeter-wave radar 221 and the LiDAR 222, on the basis of brightness information supplied by the brightness sensor 241 and information regarding whether there is fog that is supplied by the fog sensor 242, and integrates the object recognition results. Then, the recognition result integrating section 205R outputs the integrated object recognition results to the automated driving controller 112.

0179 Such a configuration makes it possible to improve the accuracy in object recognition by selectively using an object recognition result according to the condition in the outside world.

### 0180 <Processing of Sensing Performed by Data Acquisition Section of Fig. 16>

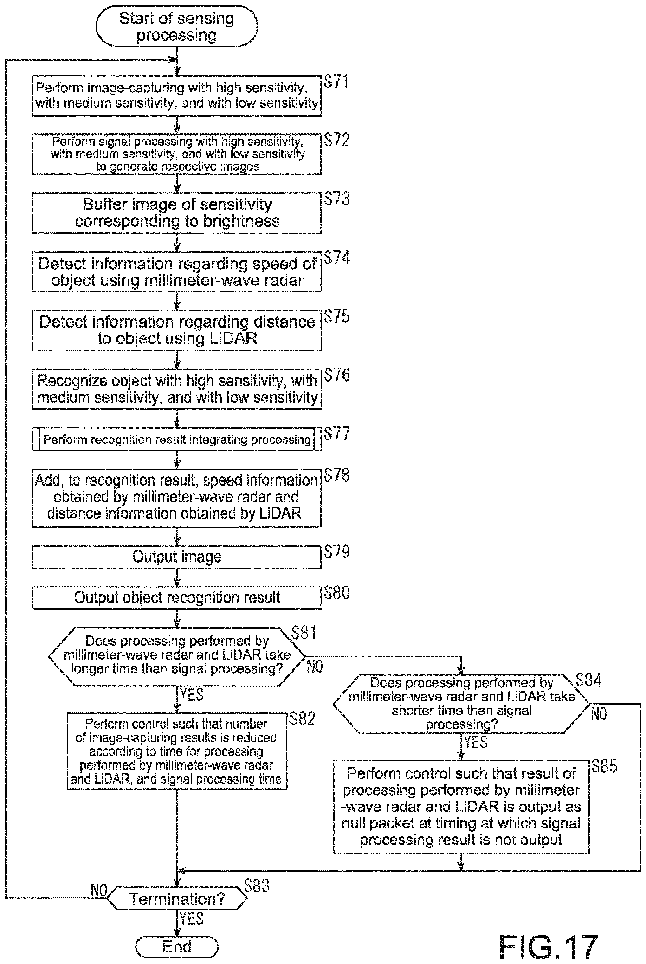

Next, sensing processing performed by the data acquisition section 102 of Fig. 16 is described with reference to a flowchart of Fig. 17.

Note that the processes of Steps S79 to S85 in the flowchart of Fig. 17 are similar to the processes of Steps S44 to S50 described with reference to the flowchart of Fig. 10. Thus, descriptions thereof are omitted. 0181

0182 That is, in Step S71, under the control of the controller 201, the image sensor 203 captures three images PH, PM, and PL of the surroundings of the vehicle 91 with respective sensitivities of the high-sensitivity section 203H, the medium-sensitivity section 203M, and the low-sensitivity section 203L, the images PH, PM, and PL being images of different sensitivities and being captured on the basis of light entering through the lens 202, and outputs signals of the captured images to the signal processing section 204.

0183 In Step S72, under the control of the controller 201, the signal processing section 204 performs signal processing on the high-sensitivity image PH using the high-sensitivity signal processing section 204H, performs signal processing on the medium-sensitivity image PM using the medium-sensitivity signal processing section 204M, and performs signal processing on the low-sensitivity image PL using the low-sensitivity signal processing section 204L, and outputs the images on which the signal processing has been performed to the recognition section 205, the buffer 206, and the determination section 207.

0184 In Step S73, from among the signals of the images of the three types of sensitivities that are output by the signal processing section 204, the controller 201 causes the buffer 206 to buffer an image of a sensitivity corresponding to the brightness obtained by the brightness sensor 241. Further, a brightness detection processing section for detecting brightness of the entirety of the view of an image captured by the image sensor 203 may be included in the signal processing section 204 to detect the brightness of the view of the image without using the brightness sensor 241.

0185 In other words, when it is dark with a brightness exhibiting a value lower than a specified value, an image on which processing has been performed by the high-sensitivity signal processing section 204H is buffered. When it is bright with a brightness exhibiting a value higher than the specified value, an image on which processing has been performed by the low-sensitivity signal processing section 204L is buffered. In a case other than the cases described above, an image on which processing has been performed by the medium-sensitivity signal processing section 204M is buffered.

0186 In Step S74, the millimeter-wave radar 221 irradiates a radio wave in the millimeter-wave band onto the surroundings of the vehicle 91, detects information regarding a speed of an object on the basis of the reflected wave with peak intensity, and outputs the detected speed information to the recognition section 205.

0187 In Step S75, the LiDAR 222 emits laser light of infrared light, receives the light reflected off the object, detects information regarding a distance to the object as three-dimensional group-of-points information on the basis of a going-and-returning period of time of the laser light, and outputs the detected information to the recognition section 205.

0188 In Step S76, the high-sensitivity recognition section 205H, the medium-sensitivity recognition section 205M, and the low-sensitivity recognition section 205L of the recognition section 205 perform object recognition processing on the basis of the images PH, PM, and PL of the respective sensitivities, and respectively output resulting object recognition results to the recognition result integrating section 205R.

0189 In Step S77, the recognition result integrating section 205R performs recognition result integrating processing to integrate the recognition results on the basis of the recognition results of the respective sensitivities, the speed information obtained by the millimeter-wave radar 221, and the distance information obtained by the LiDAR 222.

0190 In Step S78, the recognition result integrating section 205R adds the speed information obtained by the millimeter-wave radar 221 and the distance information obtained by the LiDAR 222 to an object recognition result as metadata on the basis of a result of the recognition result integrating processing to generate the object recognition result.

0191 Then, in Step S79, the buffered image is output to the automated driving controller 112, and, in Step S80, the object recognition result is output to the automated driving controller 112.

0192 The subsequent processing enables the automated driving controller 112 to perform automated driving on the basis of a more accurate object recognition result.

### 0193 <Recognition Result Integrating Processing>

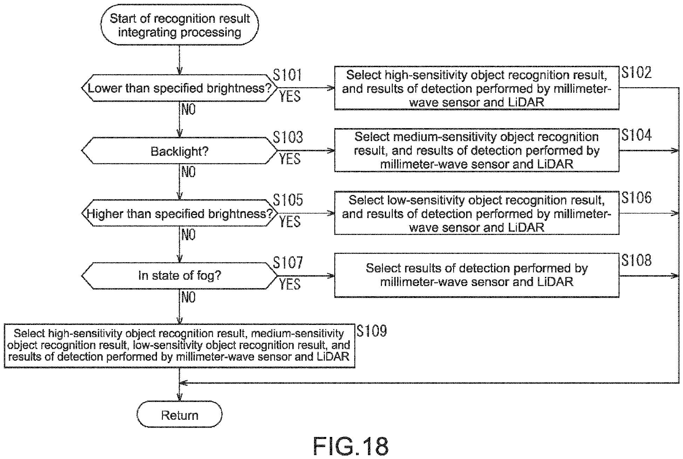

Here, the recognition result integrating processing is described with reference to a flowchart of Fig. 18.

0194 In Step S101, on the basis of brightness in the surroundings of the vehicle 91 that is detected by the brightness sensor 241, the recognition result integrating section 205R determines whether it is dark in the surroundings, with the brightness in the surroundings being equal to or lower than a specified brightness.

0195 It has been determined, in Step S101, that it is dark in the surroundings, with the brightness in the surroundings being equal to or lower than the specified brightness, the process moves on to Step S102.

0196 In Step S102, the recognition result integrating section 205R selects a high-sensitivity object recognition result, a result of detection performed by the millimeter-wave radar 221, and a result of detection performed by the LiDAR 222, as given in Pat 2 of Fig. 15.

0197 Further, it has been determined, in Step S101, that it is not dark in the surroundings, with the brightness in the surroundings not being equal to or lower than the specified brightness, the process moves on to Step S103.

0198 In Step S103, the recognition result integrating section 205R determines whether the surroundings are in a state of backlight, on the basis of a difference between bright and dark in an image PM that is a result of medium-sensitivity signal processing.

0199 It has been determined, in Step S103, that the surroundings are in the state of backlight, the process moves on to Step S104.

0200 In Step S104, the recognition result integrating section 205R selects a medium-sensitivity object recognition result, the result of detection performed by the millimeter-wave radar 221, and the result of detection performed by the LiDAR 222, as given in Pat 3 of Fig. 15.

Further, it has been determined, in Step S103, that the surroundings are not in the state of backlight, the process moves on to Step S105.0201

0202 In Step S105, on the basis of the brightness in the surroundings of the vehicle 91 that is detected by the brightness sensor 241, the recognition result integrating section 205R determines whether it is overbright in the surroundings, with the brightness in the surroundings being equal to or higher than the specified brightness.

0203 When it has been determined, in Step S105, that it is overbright in the surroundings, with the brightness in the surroundings being equal to or higher than the specified brightness, the process moves on to Step S106.

0204 In Step S106, the recognition result integrating section 205R selects a low-sensitivity object recognition result, the result of detection performed by the millimeter-wave radar 221, and the result of detection performed by the LiDAR 222, as given in Pat 4 of Fig. 15.

0205 Further, when it has been determined, in Step S105, that it is not overbright in the surroundings, the process moves on to Step S107.

0206 In Step S107, on the basis of information regarding whether there is fog in the surroundings of the vehicle 91 that is detected by the fog sensor 242, the recognition result integrating section 205R determines whether there is fog.

0207 When it has been determined, in Step S107, that the surroundings are in a state of fog, the process moves on to Step S108.

0208 In Step S108, the recognition result integrating section 205R selects the result of detection performed by the millimeter-wave radar 221 and the result of detection performed by the LiDAR 222, as given in Pat 5 of Fig. 15. However, in this case, the object recognition result is unknown. In other words, in this case, the object recognition result is unknown, but speed information and distance information are added as metadata to the object recognition result in which a recognized object is unknown.

When it has been determined, in Step S107, that the surroundings are not in the state of fog, that is, when it has been determined, in Step S107, that it is not too dark or not too bright in the surroundings, or the surroundings are not in the state of backlight or in the state of fog, the process moves on to Step S109. 0209

0210 In Step S109, the high-sensitivity object recognition result, the medium-sensitivity object recognition result, the low-sensitivity object recognition result, the result of detection performed by the millimeter-wave radar 221 and the result of detection performed by the LiDAR 222 are selected, as given in Pat 1 of Fig. 15, since the recognition result integrating section 205R can use all of the recognition results.

0211 According to the processing described above, object recognition results based on images of a plurality of sensitivities, information regarding a speed of an object that is obtained by the millimeter-wave radar 221, and information regarding a distance to the object that is obtained by the LiDAR 222 are obtained, appropriate information is selected according to a state of the outside world, and an object recognition result is generated to be output to the automated driving controller 112.

0212 This results in being able to improve the accuracy in object recognition, and to appropriately control automated driving on the basis of an accurate object recognition result.

### 0213 <<7. Fifth Embodiment>>

The example in which object recognition results based on images of a plurality of sensitivities, information regarding a speed of an object that is obtained by the millimeter-wave radar 221, and information regarding a distance to the object that is obtained by the LiDAR 222 are obtained, appropriate information is selected according to a state of the outside world, and an object recognition result is generated, has been described above.

0214 Note that, in recent years, a light-emitting diode (LED) has been increasingly used for, for example, lighting used in a traffic light, and a blinker and a brake lamp of a vehicle.

0215 For example, a traffic light using an LED blinks according to an AC power supply cycle, which is not visually recognizable to a human. Thus, a so-called flicker phenomenon may occur. In the flicker phenomenon, an image in which a traffic light is completely turned off is captured depending on a shutter speed.

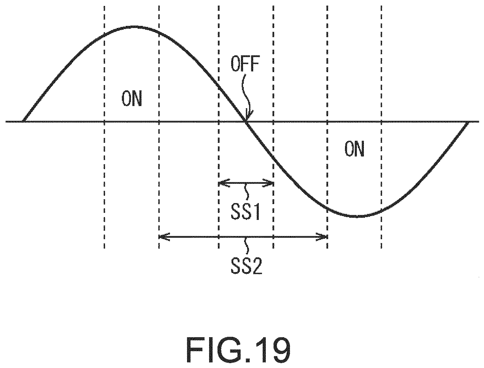

0216 That is, Fig. 19 illustrates a change in voltage of an AC power supply. When the voltage is changed as illustrated in Fig. 19, an LED is brightly turned on at a timing at which the waveform is convex upward or downward, and the LED is turned off at a timing including a timing at which inversion is performed between a positive waveform and a negative waveform.

0217 Thus, when the exposure time of the image sensor 203 is indicated by an arrow SS1, image-capturing is not performed at a timing near the timing at which inversion is performed between a positive waveform and a negative waveform, since an LED is turned off. On the other hand, when the exposure time of the image sensor 203 is indicated by an arrow SS2 that is longer than the arrow SS1, an image in which an LED of a traffic light is turned off, is not captured at any timing even if the exposure time includes a period of time that includes the timing at which inversion is performed between a positive waveform and a negative waveform. The reason is that exposure is also performed at a timing at which an LED is turned on.

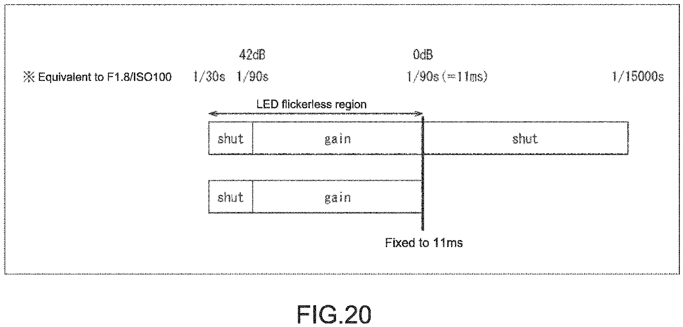

0218 Thus, in general, setting is performed for the image sensor 203 that captures an image of a traffic light, such that an image in which an LED of a traffic light is turned off is not captured by restricting the exposure time to 11 ms (= 1/90s), as illustrated in a lower portion of Fig. 20. Note that, in Fig. 20, it is assumed that the settings are equivalent to settings of the F-number of 1.8 and ISO 100.

0219 Note that, in Fig. 20, the sensitivity is adjusted by an exposure time when the exposure time is 1/30s to 1/90s, and the sensitivity is adjusted by a gain when the exposure time is 1/90s. This results in suppressing the occurrence of a flicker.

0220 However, when it is too bright in the surroundings, chromatic blurring may occur in, for example, an image with movement or overexposed highlights may occur in, for example, an image of a tunnel exit due to the restriction on exposure time.

0221 Thus, in the present disclosure, the exposure time can be restricted to 11 ms (= 1/90s) as usual when it has been confirmed, from an object recognition result, that a traffic light exists in an image, and the exposure time can be adjusted in other cases such that the exposure time is in a range of, for example, from 1/90s to 1/15000s according to the brightness in the outside world, as illustrated in an upper portion of Fig. 20.

0222 Such a configuration makes it possible to prevent an image in which a traffic light using an LED is turned off from being captured when the traffic light exists in the image, and to capture an image with an exposure time depending on the amount of light when there is no traffic light in the image.

0223 Consequently, the occurrence of blurring in an image with movement and the occurrence of overexposed highlights in, for example, an image of a tunnel exit are suppressed, and when there exists a traffic light, image-capturing is not performed in a state in which the traffic light is turned off in spite of using an LED.

0224 Further, a flicker may also occur when an LED is used for a tail lamp from among lighting used for a vehicle. In this case, there is also a need to perform similar processing. Further, an LED may be used for a blinker used for a vehicle. However, a flicker is not visible in a blinker since the lighting time of a blinker is not as long as that of a tail lamp. Thus, processing similar to that for a traffic light is performed when a tail lamp from among lamps used for a vehicle exists in an image, and the exposure time is adjusted according to the brightness when there exists a blinker.

### 0225 <Example of Configuration of Data Acquisition Section in which Exposure Time is Adjusted According to Whether Traffic Light or Vehicle Lighting Using LED Exists in Image>

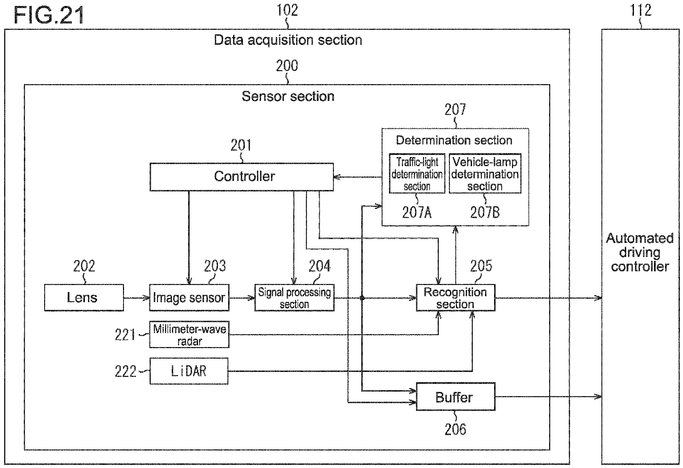

Next, an example of a configuration of the data acquisition section 102 in which the exposure time is adjusted according to whether a traffic light or vehicle lighting using an LED exists in an image, is described with reference to Fig. 21.

0226 The data acquisition section 102 of Fig. 21 is different from the data acquisition section 102 of Fig. 9 in that the determination section 207 includes a traffic-light determination section 207A and a vehicle-lamp determination section 207B.

0227 On the basis of a result of an object recognition performed by the recognition section 205, the traffic-light determination section 207A determines whether a traffic light is included in an image output by the signal processing section 204, and outputs a result of the determination to the controller 201.

0228 On the basis of the result of the object recognition performed by the recognition section 205, the vehicle-lamp determination section 207B determines whether a vehicle lamp exists in the image output by the signal processing section 204. Further, when it has been determined that there exists a vehicle lamp, the vehicle-lamp determination section 207B determines whether the vehicle lamp is a blinker of which the lighting time is shorter than a specified time. When it has been determined that the vehicle lamp is not a blinker, that is, when it has been determined that the vehicle lamp is a tail lamp of which the lighting time is longer than the specified time, the vehicle-lamp determination section 207B outputs a result of the determination to the controller 201.

0229 When a determination result indicating that a traffic light or a tail lamp exists in an image is supplied, the signal processing section 204 restricts the exposure time of the image sensor 203 to a length of time with which a flicker does not occur. In other cases, the signal processing section 204 controls the exposure time of the image sensor 203 such that the length of the exposure time is an appropriate length depending on the brightness in the outside world.

0230 According to such a configuration, the occurrence of a flicker due to a traffic light or a tail lamp is suppressed, and the occurrence of chromatic blurring in an image with movement and the occurrence of overexposed highlights in, for example, an image of a tunnel exit are suppressed.

### 0231 <Flicker Suppression Processing>

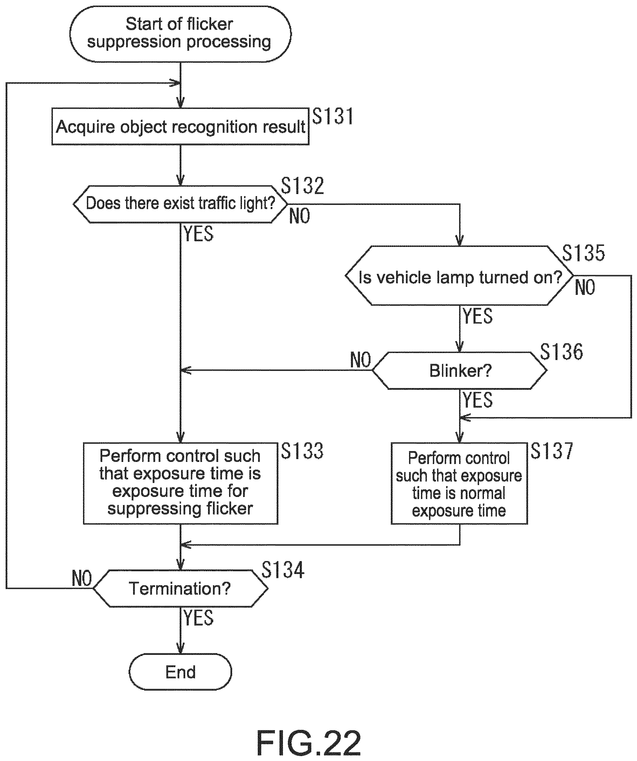

Next, flicker suppression processing performed by the data acquisition section 102 of Fig. 22 is described with reference to Fig. 22. Note that, here, the sensing processing described above is performed, and object recognition results are sequentially supplied by the recognition section 205.

0232 In Step S131, the determination section 207 acquires an object recognition result from the recognition section 205.

0233 In Step S132, the traffic-light determination section 207A determines whether a traffic light is included in the object recognition result.

0234 When it has been determined, in Step S132, that the traffic light is included, the process moves on to Step S103.

0235 In Step S133, the traffic-light determination section 207A notifies the controller 201 that the traffic light is included in the object recognition result. The controller 201 controls the image sensor 203 such that the exposure time is an exposure time for suppressing a flicker, that is, such that, for example, the exposure time is restricted to 11 ms.

0236 In Step S134, it is determined whether an instruction to terminate the processing has been given, and when it has been determined that the instruction to perform the termination has not been given, the process returns to Step S131, and the subsequent processes are repeated. Further, when it has been determined, in Step S134, that the instruction to perform the termination has been given, the processing is terminated.

Further, when it has been determined 0237, in Step S132, that there exists no traffic light, the process moves on to Step S135.

0238 In Step S135, the vehicle-lamp determination section 207B determines whether a vehicle lamp is included in the object recognition result, and when it has been determined that the vehicle-lamp is included, the process moves on to Step S136.

0239 In Step S136, the vehicle-lamp determination section 207B determines whether the vehicle lamp is a blinker of which the lighting time is shorter than a specified time.

0240 When it has been determined, in Step S136, that the vehicle lamp is not the blinker, the process moves on to Step S103.

0241 On the other hand, when it has been determined, in Step S136, that the vehicle lamp is the blinker, the process moves on to Step S137.

0242 In Step S137, the vehicle-lamp determination section 207B notifies the controller 201 that the traffic light and the tail lamp are not included in the object recognition result. The controller 201 controls the image sensor 203 such that the exposure time is a normal exposure time adjusted to the brightness in the outside world.

0243 Further, when it has been determined, in Step S135, that there exists no vehicle ramp, the process moves on to Step S137.

0244 According to the processing described above, the occurrence of a flicker is suppressed with respect to a traffic light or tail lamp using an LED, and this results in preventing an image in which the traffic light or the tail lamp is turned off from being captured. Further, it is possible to perform image-capturing with a normal exposure time adjusted to the brightness when there does not exist a traffic light or a tail lamp. This makes it possible to suppress the occurrence of chromatic blurring in an image with movement and the occurrence of overexposed highlights in, for example, an image of a tunnel exit.

### <<8. Example of Performing Series of Processes Using Software>

Note that the series of processes described above can be performed using hardware or software. When the series of processes is performed using software, a program included in the software is installed on a computer from a recording medium. Examples of the computer include a computer incorporated into dedicated hardware, and a computer such as a general-purpose computer that is capable of performing various functions by various programs being installed thereon.

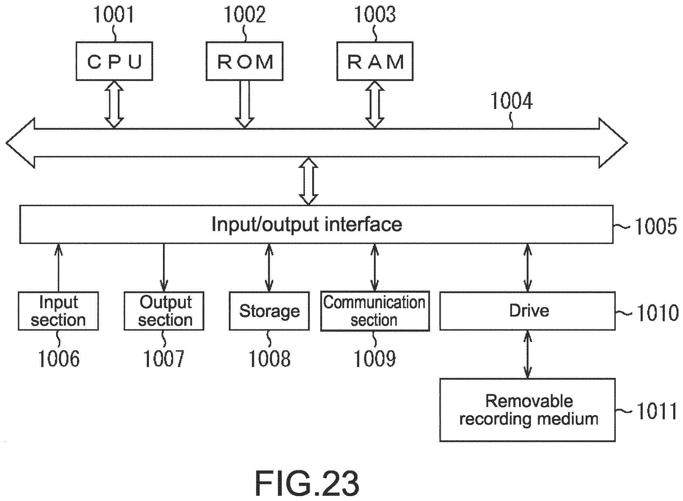

Fig. 23 illustrates an example of a configuration of a general-purpose computer. This computer includes a central processing unit (CPU) 1001. An input/output interface 1005 is connected to the CPU 1001 via a bus 1004. A read only memory (ROM) 1002 and a random access memory (RAM) 1003 are connected to the bus 1004.

An input section 1006, an output section 1007, a storage 1008, and a communication section 1009 are connected to the input/output interface 1005. The input section 1006 includes input devices such as a keyboard and a mouse that are used by a user to input an operation command. The output section 1007 outputs a processing operation screen and an image of a processing result to a display device. The storage 1008 includes, for example, a hard disk drive that stores therein a program and various data. The communication section 1009 includes, for example, a local area network (LAN) adapter, and performs communication processing through a network as represented by the Internet. Further, a drive 1010 is connected to the input/output interface 1005. The drive 1010 reads data from and writes data into a removable recording medium 1011 such as a magnetic disk (including a flexible disk), an optical disk (including a compact disc read-only memory (CD-ROM) and a digital versatile disc (DVD)), a magneto-optical disk (including a mini disc (MD)), or a semiconductor memory.

The CPU 1001 performs various processes in accordance with a program stored in a ROM 1002, or in accordance with a program that is read from the removable recording medium 1011 such as a magnetic disk, an optical disk, a magneto-optical disk, or a semiconductor memory to be installed on the storage 1008, and is loaded into a RAM 1003 from the storage 1008. Data necessary for the CPU 1001 to perform various processes is also stored in the RAM 1003 as necessary.

In the computer having the configuration described above, the series of processes described above is performed by the CPU 1001 loading, for example, a program stored in the storage 1008 into the RAM 1003 and executing the program via the input/output interface 1005 and the bus 1004.

For example, the program executed by the computer (the CPU 1001) can be provided by being stored in the removable recording medium 1011 serving as, for example, a package medium. Further, the program can be provided via a wired or wireless transmission medium such as a local area network, the Internet, or digital satellite broadcasting.

In the computer, the program can be installed on the storage 1008 via the input/output interface 1005 by the removable recording medium 1011 being mounted on the drive 1010. Further, the program can be received by the communication section 1009 via the wired or wireless transmission medium to be installed on the storage 1008. Moreover, the program can be installed in advance on the ROM 1002 or the storage 1008.

Note that the program executed by the computer may be a program in which processes are chronologically performed in the order of the description herein, or may be a program in which processes are performed in parallel or a process is performed at a necessary timing such as a timing of calling.

Note that the function of the automated driving controller 112 of Fig. 3 is implemented by the CPU 1001 of Fig. 23. Further, the storage 111 of Fig. 3 is implemented by the storage 1008 of Fig. 23.

Further, the system as used herein refers to a collection of a plurality of components (such as apparatuses and modules (parts)) and it does not matter whether all of the components are in a single housing. Thus, a plurality of apparatuses accommodated in separate housings and connected to one another via a network, and a single apparatus in which a plurality of modules is accommodated in a single housing are both systems.

Note that the embodiment of the present disclosure is not limited to the examples described above, and various modifications may be made thereto without departing from the scope of the present disclosure.

For example, the present disclosure may also have a configuration of cloud computing in which a single function is shared to be cooperatively processed by a plurality of apparatuses via a network.

Further, the respective steps described using the flowcharts described above may be shared to be performed by a plurality of apparatuses, in addition to being performed by a single apparatus.

Moreover, when a single step includes a plurality of processes, the plurality of processes included in the single step may be shared to be performed by a plurality of apparatuses, in addition to being performed by a single apparatus.

Note that the present disclosure may also take the following configurations.

<1> An image processing apparatus, including:
   an image-capturing section that captures an image of surroundings of a vehicle that is an own automobile; and
   an object recognition processing section that performs object recognition processing of recognizing an object in the image captured by the image-capturing section, and outputs an object recognition processing result for each recognized object to a driving controller that controls an operation of the vehicle, the object recognition processing result being obtained by the object recognition processing.
<2> The image processing apparatus according to <1>, in which
   the object recognition processing section recognizes, from the image and as the object, at least one of information regarding a ground surface, information regarding a human, information regarding a vehicle, information regarding a building structure, information regarding a fixed object, information regarding a natural environment, or information regarding the sky, and outputs the recognized object as the object recognition processing result.
<3> The image processing apparatus according to <2>, in which
   the object recognition processing result of the ground surface includes at least one of a road, a sidewalk, a parking lot, or a trajectory.
<4> The image processing apparatus according to <2> in which
   the object recognition processing result of the human includes at least one of a pedestrian or a driver.
<5> The image processing apparatus according to <2>, in which
   the object recognition processing result of the vehicle includes at least one of an automobile, a truck, a bus, an electric train or a railway train that runs on rail, a motorcycle, a bicycle, or a tractor.
<6> The image processing apparatus according to <2>, in which
   the object recognition processing result of the building structure includes at least one of a building, a wall, a fence, a guardrail, a bridge, or a tunnel.
<7> The image processing apparatus according to <2>, in which
   the object recognition processing result of the natural environment includes at least one of information regarding vegetation or information regarding terrain.
<8> The image processing apparatus according to <2>, in which
   the object recognition processing result of the natural environment includes information regarding vegetation and information regarding terrain.
<9> The image processing apparatus according to any one of <1> to <8>, further including
   a signal processing section that performs signal processing on the image, in which
   the object recognition processing section recognizes the object in the image by performing the object recognition processing on the basis of the image on which the signal processing has been performed by the signal processing section, and
   when the object recognition processing performed by the object recognition processing section takes a longer time than the signal processing performed by the signal processing section, the signal processing section outputs the image on which the signal processing has been performed after reducing the number of the images on the basis of a time difference in processing time between the object recognition processing and the signal processing.
<10> The image processing apparatus according to <9>, in which
   when the image on which the signal processing has been performed is output after the number of the images is reduced, the object recognition processing result is output with the image first previous to a certain number of the images, the certain number being the number of the images not used due to the reduction in the number of the images.
<11> The image processing apparatus according to any one of <1> to <8>, further including
   a signal processing section that performs signal processing on the image, in which
   the object recognition processing section recognizes the object in the image by performing the object recognition processing on the basis of the image on which the signal processing has been performed by the signal processing section, and
   when the object recognition processing performed by the object recognition processing section takes a shorter time than the signal processing performed by the signal processing section, the object recognition processing section outputs the object recognition processing result after reducing the number of the object recognition processing results on the basis of a time difference in processing time between the object recognition processing and the signal processing.
<12> The image processing apparatus according to any one of <1> to <11>, further including
   a speed information detector that detects information regarding a speed of an object in the surroundings of the own automobile; and a distance information detector that detects information regarding a distance to the object in the surroundings of the own automobile, in which
   the object recognition processing section adds metadata to each object recognition processing result in a state in which the metadata is associated with the object recognition processing result, the metadata including the speed information and the distance information, and
   the object recognition processing section outputs the object recognition processing result to which the metadata has been added.
<13> The image processing apparatus according to <12>, in which
   with respect to the object recognition processing result being from among the object recognition processing results and being detected by the speed information detector and the distance information detector with a degree of accuracy that exhibits a value larger than a specified value, the object recognition processing section adds the metadata including the speed information and the distance information to the object recognition processing result, and outputs the object recognition processing result to which the metadata has been added.
<14> The image processing apparatus according to any one of <1> to <13>, in which
   the object recognition processing section outputs the object recognition processing result in a low-load mode or in a high-load mode, the low-load mode being a mode of outputting a portion of the object recognition processing results according to a state of the surroundings, the high-load mode being a mode of outputting all of the object recognition processing results.
<15> The image processing apparatus according to <14>, in which
   when the state of the surroundings is a state in which a vehicle in the surroundings travels at a constant speed, and a distance to the vehicle in the surroundings remains unchanged for a specified period of time, the object recognition processing section outputs, in the low-load mode, the object recognition processing result in a traveling direction from among the object recognition processing results.
<16> The image processing apparatus according to any one of <1> to <15>, in which
   the image-capturing section captures a plurality of images with different sensitivities,
   the object recognition processing section performs the object recognition processing on each of the plurality of images of the different sensitivities to generate a plurality of the object recognition processing results of the different sensitivities, and
   according to a state of the surroundings, the object recognition processing section performs selection from the plurality of the object recognition processing results of the different sensitivities to output the selected object recognition processing result.
<17> The image processing apparatus according to any one of <1> to <16>, in which
   when a specified object recognition processing result from among the object recognition processing results is included, a parameter of the image-capturing section is controlled.
<18> The image processing apparatus according to <17>, in which
   when a traffic light and a tail lamp are included as the specified object recognition processing results from among the object recognition processing results, an exposure time from among the parameters of the image-capturing section is controlled such that a length of the exposure time is equal to or greater than a specified length of time.
<19> An image processing method, including:
   performing image-capturing processing of capturing an image of surroundings of a vehicle that is an own automobile; and
   performing object recognition processing of recognizing an object in the captured image, the performing the object recognition processing including outputting an object recognition processing result for each recognized object to a driving controller that controls an operation of the vehicle, the object recognition processing result being obtained by the object recognition processing.
<20> A program that causes a computer to operate as an image-capturing section and an object recognition processing section,
   the image-capturing section capturing an image of surroundings of a vehicle that is an own automobile,
   the object recognition processing section performing object recognition processing of recognizing an object in the image captured by the image-capturing section, the object recognition processing section outputting an object recognition processing result for each recognized object to a driving controller that controls an operation of the vehicle, the object recognition processing result being obtained by the object recognition processing.

### Reference Signs List

0 2 4 5
- 91: vehicle
- 100: vehicle control system
- 102: data acquisition section
- 102: automated driving controller
- 200, 200-1 to 200-6: sensor section
- 201, 201-1 to 201-6: controller
- 202, 202-1 to 202-6: lens
- 203, 203-1 to 203-6: image sensor
- 203H: high-sensitivity section
- 203M: medium-sensitivity section
- 203L: low-sensitivity section
- 204, 204-1 to 204-6: signal processing section
- 204H: high-sensitivity signal processing section
- 204M: medium-sensitivity signal processing section
- 204L: low-sensitivity signal processing section
- 205, 205-1 to 205-6: recognition section
- 205H: high-sensitivity recognition section
- 205M: medium-sensitivity recognition section
- 205L: low-sensitivity recognition section
- 205R: recognition result integrating section
- 206, 206-1 to 206-6: buffer
- 207: determination section
- 207A: traffic-light determination section
- 207B: vehicle-lamp determination section
- 221: millimeter-wave radar
- 222: LiDAR
- 223: collision determination section
- 231: recognition result integrating section
- 232: image integrating section
- 241: brightness sensor
- 242: fog sensor

## Claims

1. An image processing apparatus, comprising:
an image-capturing section that captures an image of surroundings of a mobile object; and
an object recognition processing section that performs object recognition processing of recognizing an object in the image captured by the image-capturing section, and outputs an object recognition processing result for each recognized object through a network in the mobile object, the object recognition processing result being obtained by the object recognition processing.

2. The image processing apparatus according to claim 1, wherein
the object recognition processing section recognizes, from the image and as the object, at least one of information regarding a ground surface, information regarding a human, information regarding a vehicle, information regarding a building structure, information regarding a fixed object, information regarding a natural environment, or information regarding the sky, and outputs the recognized object as the object recognition processing result.

3. The image processing apparatus according to claim 2, wherein
the object recognition processing result of the ground surface includes at least one of a road, a sidewalk, a parking lot, or a trajectory.

4. The image processing apparatus according to claim 2, wherein
the object recognition processing result of the human includes at least one of a pedestrian or a driver.

5. The image processing apparatus according to claim 2, wherein
the object recognition processing result of the vehicle includes at least one of an automobile, a truck, a bus, an electric train or a railway train that runs on rail, a motorcycle, a bicycle, or a tractor.

6. The image processing apparatus according to claim 2, wherein
the object recognition processing result of the building structure includes at least one of a building, a wall, a fence, a guardrail, a bridge, or a tunnel.

7. The image processing apparatus according to claim 2, wherein
the object recognition processing result of the fixed object includes at least one of a pole, a group of poles, a traffic sign, or a traffic light.

8. The image processing apparatus according to claim 2, wherein
the object recognition processing result of the natural environment includes at least one of information regarding vegetation or information regarding terrain.

9. The image processing apparatus according to claim 1, further comprising
a signal processing section that performs signal processing on the image, wherein
the object recognition processing section recognizes the object in the image by performing the object recognition processing on a basis of the image on which the signal processing has been performed by the signal processing section, and
when the object recognition processing performed by the object recognition processing section takes a longer time than the signal processing performed by the signal processing section, the signal processing section outputs the image on which the signal processing has been performed after reducing the number of the images on a basis of a time difference in processing time between the object recognition processing and the signal processing.

10. The image processing apparatus according to claim 9, wherein
when the image on which the signal processing has been performed is output after the number of the images is reduced, the object recognition processing result is output with the image first previous to a certain number of the images, the certain number being the number of the images not used due to the reduction in the number of the images.

11. The image processing apparatus according to claim 1, further comprising
a signal processing section that performs signal processing on the image, wherein
the object recognition processing section recognizes the object in the image by performing the object recognition processing on a basis of the image on which the signal processing has been performed by the signal processing section, and
when the object recognition processing performed by the object recognition processing section takes a shorter time than the signal processing performed by the signal processing section, the object recognition processing section outputs the object recognition processing result after reducing the number of the object recognition processing results on a basis of a time difference in processing time between the object recognition processing and the signal processing.

12. The image processing apparatus according to claim 1, further comprising
a speed information detector that detects information regarding a speed of an object in the surroundings of the mobile object; and
a distance information detector that detects information regarding a distance to the object in the surroundings of the mobile object, wherein
the object recognition processing section adds metadata to each object recognition processing result in a state in which the metadata is associated with the object recognition processing result, the metadata including the speed information and the distance information, and
the object recognition processing section outputs the object recognition processing result to which the metadata has been added.

13. The image processing apparatus according to claim 12, wherein
with respect to the object recognition processing result being from among the object recognition processing results and being detected by the speed information detector and the distance information detector with a degree of accuracy that exhibits a value larger than a specified value, the object recognition processing section adds the metadata including the speed information and the distance information to the object recognition processing result, and outputs the object recognition processing result to which the metadata has been added.

14. The image processing apparatus according to claim 1, wherein
the object recognition processing section outputs the object recognition processing result in a low-load mode or in a high-load mode, the low-load mode being a mode of outputting a portion of the object recognition processing results according to a state of the surroundings, the high-load mode being a mode of outputting all of the object recognition processing results.

15. The image processing apparatus according to claim 14, wherein
when the state of the surroundings is a state in which a mobile object in the surroundings moves at a constant speed, and a distance to the mobile object in the surroundings remains unchanged for a specified period of time, the object recognition processing section outputs, in the low-load mode, the object recognition processing result in a traveling direction from among the object recognition processing results.

16. The image processing apparatus according to claim 1, wherein
the image-capturing section captures a plurality of images with different sensitivities,
the object recognition processing section performs the object recognition processing on each of the plurality of images of the different sensitivities to generate a plurality of the object recognition processing results of the different sensitivities, and
according to a state of the surroundings, the object recognition processing section performs selection from the plurality of the object recognition processing results of the different sensitivities to output the selected object recognition processing result.

17. The image processing apparatus according to claim 1, wherein
when a specified object recognition processing result from among the object recognition processing results is included, a parameter of the image-capturing section is controlled.

18. The image processing apparatus according to claim 17, wherein
when a traffic light and a tail lamp are included as the specified object recognition processing results from among the object recognition processing results, an exposure time from among the parameters of the image-capturing section is controlled such that a length of the exposure time is equal to or greater than a specified length of time.

19. An image processing method, comprising:
performing image-capturing processing of capturing an image of surroundings of a mobile object; and
performing object recognition processing of recognizing an object in the captured image, the performing the object recognition processing including outputting an object recognition processing result for each recognized object through a network in the mobile object, the object recognition processing result being obtained by the object recognition processing.

20. A program that causes a computer to operate as an image-capturing section and an object recognition processing section,
the image-capturing section capturing an image of surroundings of a mobile object,
the object recognition processing section performing object recognition processing of recognizing an object in the image captured by the image-capturing section, the object recognition processing section outputting an object recognition processing result for each recognized object through a network in the mobile object, the object recognition processing result being obtained by the object recognition processing.
